# EUROPÄISCHE PATENTSCHRIFT

(11) **EP 3 667 244 B1**
(45) Veröffentlichungstag und Bekanntmachung des Hinweises auf die Patenterteilung: **14.06.2023**
(21) Anmeldenummer: 19213382.5
(22) Anmeldetag: 04.12.2019
(51) Int. Cl.: G01D 4/00, G01D 9/00, G01D 21/00, H04Q 9/00, H04W 56/00, H04W 4/38

(54) **VERFAHREN ZUM SAMMELN VON DATEN SOWIE SENSOR UND VERSORGUNGSNETZ**
METHOD FOR COLLECTING DATA AND SENSOR AND SUPPLY NETWORK
PROCÉDÉ DE COLLECTE DE DONNÉES AINSI QUE CAPTEUR ET RÉSEAU D'ALIMENTATION

(30) Priorität: 14.12.2018 DE 102018009825
(43) Veröffentlichungstag der Anmeldung: 17.06.2020
(73) Patentinhaber: Diehl Metering Systems GmbH, 90451 Nürnberg (DE); DIEHL METERING SAS, 68304 Saint Louis (FR)
(72) Erfinder: Schmitz, Stefan, 90455 Nürnberg (DE); Kauppert, Thomas, 90455 Nürnberg (DE); Joppich-Dohlus, Petra, 91080 Rathsberg (DE); Schmidt, Achim, 91367 Weißenohe (DE); Sosna, Christoph, 90429 Nürnberg (DE); Bach, Guy, 68640 Waldighofen (FR); Breton, Aster, 05350 Saint Véran (FR); Gottschalk, Klaus, 90610 Winkelhaid (DE)
(74) Vertreter: Diehl Patentabteilung

(56) Entgegenhaltungen:
- US-A1- 2013 285 834

## Beschreibung

Die vorliegende Erfindung betrifft zum einen ein Verfahren zum Sammeln von Daten gemäß dem Oberbegriff des Anspruchs 1, einen Sensor gemäß dem Oberbegriff des Anspruchs 19 sowie ein Versorgungsnetz gemäß dem Oberbegriff des Anspruchs 20.

### Technologischer Hintergrund

Verbrauchszähler sind Bestandteil von Versorgungsnetzen zur Verteilung von Verbrauchsgütern, wie z.B. Gas, Wasser, Wärme oder Elektrizität, und dienen dazu Verbrauchsdaten zu generieren. Verbrauchsdaten werden auf der Basis von von einem Messelement eines Sensors gelieferten Rohmessdaten von einem zählerseitigen Mikroprozessor errechnet und über ein Kommunikationssystem in Form eines BUS-Systems, insbesondere eines sogenannten M-BUS-Systems an eine zentrale Datenverwaltung (Head-End-System) weitergeleitet. Bei den Daten handelt es sich vor allem um den aktuellen Verbrauch, d.h. den Zählerstand.

Hierbei werden Rohmessdaten von dem Messelement eines Sensors des Verbrauchszählers zu vorbestimmten vorgegebenen Zeitpunkten generiert, von einem Mikroprozessor des Verbrauchszählers ausgewertet d. h. in Verbrauchsdaten umgerechnet und die daraus resultierenden Verbrauchsdaten anschließend über eine primäre Kommunikationsstrecke von einer Lese- bzw. Empfangseinrichtung (M-BUS-Master bzw. Konzentrator oder Datensammler) zu festgelegten Zeitpunkten an den einzelnen lokal angeordneten Verbrauchszähler abgefragt. Anschließend werden die Verbrauchsdaten von der Lese- bzw. Empfangseinrichtung über eine tertiäre Kommunikationsstrecke, beispielsweise auf Basis von LAN, GPRS, 3G, LTE, weiter zu einem Head-End-System übertragen. Die Verbrauchsdaten können dann im Head-End angezeigt oder zur Rechnungsstellung verwendet werden. Die bisherige Konzeption der Verbrauchsdatenerfassung ist sowohl in ihrer Informationstiefe als auch in ihrem Informationsumfang begrenzt.

### Druckschriftlicher Stand der Technik

Die US 2013/285834 A1 beschreibt ein Verfahren zum Erhalt von genauen, momentanen elektrischen Verbrauchsdaten für Telemetrie Zwecke. Die Daten sollen innerhalb einiger weniger Sekunden mit hoher Auflösung übertragen werden. Pulse werden zusammen mit einem Zeitstempel übertragen, wobei der jeweiligen Puls-bezogene Zeitstempel an dem nachziehenden Ende des jeweiligen Pulses erzeugt wird. Die Übertragung der mit Zeitstempel versehenen Pulse soll permanent in einem fest vorgegebenen Zeitraster von wenigen Sekunden erfolgen.

### Aufgabe der vorliegenden Erfindung

Die Aufgabe der vorliegenden Erfindung besteht darin, ein gattungsgemäßes Verfahren zum Sammeln und/oder Weiterleiten von Daten sowie einen hierfür einzusetzenden Sensor jeweils mit gesteigertem Informationsinhalt zur Verfügung zu stellen.

### Lösung der Aufgabe

Die vorstehende Aufgabe wird durch die Merkmale des Anspruchs 1 gelöst, durch einen Sensor gemäß Anspruch 19 sowie durch ein Versorgungsnetz gemäß Anspruch 20. Zweckmäßige Ausgestaltungen des erfindungsgemäßen Verfahrens werden in den abhängigen Ansprüchen beansprucht.

Erfindungsgemäß ist ein Verfahren zum Sammeln von Daten vorgesehen, wobei es sich bei den Daten vorzugsweise um Daten in Zusammenhang mit einem Verbrauch, einem physikalischen oder physikalisch-chemischen Parameter und/oder einem Betriebszustand im Rahmen eines Betriebs eines lokalen Sensors, vorzugsweise eines Sensors für einen Verbrauchszähler, als Bestandteil eines mindestens einen lokalen Sensor vorzugsweise eine Mehrzahl von lokalen Sensoren umfassendes Versorgungsnetzes zur Verteilung eines Verbrauchsguts handelt, wobei der Sensor ein Messelement enthält, das Messelement des jeweiligen Sensors elementare Messeinheiten, die mindestens einer physikalischen oder physikalisch-chemischen Größe oder mindestens eines physikalischen oder physikalisch-chemischen Parameters entsprechen, als Rohmessdaten liefert, und der Sensor Funk-Kommunikationsmittel sowie Speichermittel umfasst, dadurch gekennzeichnet, dass zur Festlegung der Messauflösung des Sensors die Bedingungen für ein Generieren von Zeitstempelungen unter Anwendung eines Korrelierungsmodells vorher festgelegt werden, auf der Basis des Korrelierungsmodells Zeitstempelungen vonaufeinander folgenden Rohmessdaten in dem Sensor generiert werden, die Zeitstempelungen über eine drahtgebundene Verbindung und/oder über eine Funkstrecke übertragen werden, so dass auf Basis der Zeitstempelungen unter Anwendung des Korrelierungsmodells die vom Messelement erfassten Rohmessdaten rekonstruiert und ausgewertet werden, wobei die Bedingungen für ein Generieren von Zeitstempelungen und/oder eine entsprechende Änderungsrate im Rahmen des Korrelierungsmodells dynamisch änderbar sind.

Erfindungsgemäß werden zur Festlegung der Messauflösung des Sensors die Bedingungen für ein Generieren von Zeitstempelungen unter Anwendung eines Korrelierungsmodells vorher festgelegt. Auf der Basis des Korrelierungsmodells werden Zeitstempelungen von aufeinanderfolgenden Rohmessdaten in dem Sensor generiert und in den Speichermitteln abgelegt. Anschließend werden lediglich die den erfassten Rohmessdaten zugeordneten Zeitstempelungen über die primäre Kommunikationsstrecke übertragen, so dass auf Basis der bei dem Master ankommenden Zeitstempelungen unter Anwendung des Korrelierungsmodells die vom Messelement erfassten Rohmessdaten nach erfolgter Übertragung wieder rekonstruiert und ausgewertet werden können. Hierdurch entfallen rechenaufwendige und deshalb energieintensive Rechenoperationen im Bereich des lokalen Sensors. Rechenaufwendige und energieintensive Rechenoperationen können somit in den Bereich des Masters oder eines Head-Ends verlagert werden. Das erfindungsgemäße Verfahren ermöglicht es, Zeitstempelungen von Rohmessdaten in einem fortlaufenden, vollständigen und konsistenten Zeitzusammenhang, also lückenlos, insbesondere im Bereich einer entfernten zentralen Verarbeitungsanlage bzw. einem Head-End-System bereitzustellen. Die aus den Zeitstempelungen rekonstruierten Rohmessdaten können dem Zeitverlauf kontinuierlich zugeordnet werden, d.h. bilden einen Realzeit-Verlauf ab, der diskontinuierliche Lücken oder Datenfehlzeiten ausschließt. Der gemäß dem erfindungsgemäßen Verfahren im Head-End erzeugte kontinuierliche Rohmessdatenstrom besitzt im Vergleich zu bisherigen Lösungen eine sehr viel höhere Auflösung über der kontinuierlichen Zeitachse. Die Erfindung ermöglicht es, neben z. B. einer Verbrauchsberechnung eine viel größere Anzahl von Berechnungen und/oder Feststellungen und/oder Funktionen einschließlich "Business"-Funktionen beispielsweise im Head-End-System vornehmen zu können, als dies bisher möglich war. Aufgrund des erfindungsgemäßen Verfahrens kann zudem der Aufbau des Sensors wesentlich einfacher und kostengünstiger sein, da komplexe Mikroprozessoren für Berechnungen, wie z. B. zur Berechnung der Durchflussmenge, wegfallen. Aufgrund des erfassten zeitlichen Zusammenhangs der Rohmessdaten können Manipulationen vermieden werden, da die Messergebnisse über deren gesamten zeitlichen Verlauf mit empirischen Werten über die gesamte Zeitachse verglichen werden können. Ferner ist der Energieverbrauch der Baugruppe aus Sensor und der Zeitstempelaufbereitung bzw. den Kommunikationsmitteln wegen des Wegfalls von energieintensiver Rechenleistung wesentlich geringer als bei bisherigen Ausführungen, welche die Daten lokal auswerten. Bei den Zeitstempelungen kann es sich um Zeitpunkte oder Zeitdifferenzen handeln. Die Zeitpunkte oder Zeitdifferenzen können Ist-Zeitdaten oder Realzeitdaten sein oder zumindest daran orientiert sein. Die Zeitdifferenzen können von Zeitstempelung zu Zeitstempelung und/oder von einem fest vorgegebenen Zeitpunkt aus gebildet sein.

Erfindungsgemäß sind die Bedingungen für ein Generieren von Zeitstempelungen im Rahmen des Korrelierungsmodells dynamisch änderbar. Die dynamische Änderung der Bedingungen für ein Generieren von Zeitstempelungen kann vorteilhafterweise einen direkten Einfluss auf die Datenmenge haben, welche über die Funkverbindung übertragen wird. Somit kann in einfacher Weise auf Veränderungen in der Funkverbindung reagiert werden, ohne dass es zu einem Abriss des Datenstroms bzw. des rekonstruierten Rohmessdatenstroms kommt.

Erfindungsgemäß stehen der oder die lokalen Sensoren über eine primäre Kommunikationsstrecke mit einem Datensammler in Verbindung, ist zwischen dem Datensammler und einem Head-End eine tertiäre Kommunikationsstrecke vorgesehen und werden die von Sensoren übertragenen Zeitstempelungen im Datensammler und/oder im Head-End gesammelt, gespeichert und/oder ausgewertet. Die Übertragung der Zeitstempelungen über die primäre und tertiäre Kommunikationsstrecke ermöglicht es, eine erheblich größere Anzahl von Berechnungen und/oder Feststellungen und/oder Funktionen einschließlich "Business"-Funktionen im Head-End, wo genügend Rechenleistung zur Verfügung steht, vornehmen zu können als bisher.

Bei dem Korrelierungsmodell kann ein bestimmter Wert oder eine bestimmte Wertänderung oder eine bestimmte Wertdifferenz der mindestens einen physikalischen oder physikalisch-chemischen Größe oder des mindestens einen physikalischen oder physikalisch-chemischen Parameters für die Zuordnung einer Zeitstempelung festgelegt werden, wobei bei einem Erfassen des bestimmten Werts oder der bestimmten Wertdifferenz oder der bestimmten Wertänderung durch das Messelement die Zeitstempelung ausgelöst, als solche in den Speichermitteln des Sensors abgespeichert und für die Übertragung bereitgestellt wird. Ändert sich der vom Sensor erfasste Wert nicht, wird keine Zeitstempelung erzeugt. Somit können typisch für das erfindungsgemäße Verfahren längere Zeiträume ohne Zeitstempelung verstreichen. Es müssen somit nicht ständig Daten übertragen werden. Dennoch besitzt das Verfahren eine sehr hohe Auflösung. Insbesondere können im Rahmen des Korrelierungsmodells ein schrittweise oder inkrementell sich erhöhender Zählerstand und/oder eine Wertetabelle mittels Zeitstempelungen abgebildet werden.

Vorzugsweise sind die Zeitstempelungen mit einem Vorzeichen, z.B. Plus- oder Minusvorzeichen, versehen. Dies ist vor allem bei der Abbildung einer Wertetabelle von Vorteil, da hierdurch festgelegt wird, ob die konkrete Zeitstempelung einen aufsteigenden oder absteigenden Wert der Wertetabelle betrifft.

Gemäß der Erfindung werden eine Mehrzahl von Zeitstempelungen entlang der primären Kommunikationsstrecke jeweils als Datenpaket übertragen.

Vorteilhafterweise kann auf Basis der beim Datensammler und/oder beim Head-End ankommenden Zeitstempelungen unter Anwendung des Korrelierungsmodells ein Rohmessdatenstrom generiert werden. Bei den betreffenden aufeinanderfolgenden Zeitstempelungen handelt es sich insbesondere um keine Berechnungen und/oder Auswertungen.

Erfindungsgemäß wird die Festlegung der Bedingungen für ein Generieren von Zeitstempelungen durch den Datensammler und/oder durch das Head-End-System vorgenommen. Der Datensammler und/oder das Head-End-System können somit in einfacher Weise die Bedingungen für ein Generieren von Zeitstempelungen festlegen bzw. dynamisch ändern und diese an den Sensor bzw. den Verbrauchszähler übertragen.

Besonders vorteilhaft ist, dass zur Festlegung der Bedingungen für ein Generieren von Zeitstempelungen ein Skalierungsfaktor vorgesehen sein kann. Der Skalierungsfaktor ändert die Bedingungen für ein Generieren von Zeitstempelungen aufgrund der Rohmessdaten.

Vorteilhafterweise kann der Skalierungsfaktor vom Datensammler und/oder vom Head-End-System an den Sensor bzw. den Verbrauchszähler übermittelt werden. Der Datensammler und/oder das Head-End-System können den Skalierungsfaktor für einen individuellen Sensor bzw. Verbrauchszähler festlegen und an diesen übertragen.

Besonders vorteilhaft ist, dass die Festlegung der Bedingungen für ein Generieren von Zeitstempelungen auf Basis einer Leistungsanalyse der Funkverbindung vorgenommen wird. Durch dynamisch festgelegte Bedingungen für ein Generieren von Zeitstempelungen kann eine Leistungsänderung der Funkverbindung berücksichtigt werden. Sofern der Durchsatz bzw. die Übertragungsbandbreite der Funkverbindung abnimmt, kann der Fall eintreten, dass die Funkverbindung nicht länger in der Lage ist, die aktuelle Datenmenge, insbesondere in Form von Zeitstempelungen zu übertragen. Durch die Anpassung der Bedingungen für ein Generieren von Zeitstempelungen kann somit die zu übertragende Datenmenge angepasst und gegebenenfalls verringert werden.

Vorteilhafterweise kann die Festlegung der Bedingungen für ein Generieren von Zeitstempelungen auf Basis der Anforderungen einer Anwendung, insbesondere welche die rekonstruierten Rohmessdaten verwendet, vorgenommen werden. Unterschiedliche Anwendungen erfordern beispielsweise unterschiedliche Auflösungen der rekonstruierten Rohmessdaten. Somit kann z. B. durch die Anpassung der Bedingungen für ein Generieren von Zeitstempelungen die zu übertragende Datenmenge beeinflusst werden, so dass die Auslastung der Funkverbindung an die Anforderungen der Anwendung angepasst wird. Beispielsweise kann eine Anwendung eine höhere Genauigkeit bzw. Granularität der rekonstruierten Rohmessdaten benötigen, was z. B. häufigere Zeitstempelungen zur Folge hat. Die Anpassung der Bedingungen für ein Generieren von Zeitstempelungen und damit des Rohmessdatenstroms kann z. B. durch den Skalierungsfaktor erfolgen.

Zweckmäßigerweise können die Anforderungen der Anwendung zeitlich veränderlich sein. So können sich die Anwendungen, welche auf die rekonstruierten Rohmessdaten zugreifen, mit der Zeit ändern bzw. ausgetauscht werden, so dass sich die Anforderungen an die Auflösung bzw. an die Granularität der rekonstruierten Rohmessdaten einer Anwendung mit der Zeit ändern. Durch die Anpassung der Bedingungen für ein Generieren von Zeitstempelungen an die Anforderungen der Anwendung kann der Bandbreitenbedarf der Funkverbindung bzw. des Funknetzes insgesamt reduziert werden. Beispielsweise kann eine Verringerung der zu übertragenden Datenmenge die Auslastung des Funkkanals reduzieren, so dass diese frei gewordenen Kapazitäten von anderen Anwendungen oder anderen Sensoren bzw. Verbrauchszählern genutzt werden können. Somit kann die Effizienz des gesamten Netzwerks gesteigert werden. Andererseits kann auch auf die Anforderung einer Anwendung reagiert werden, welche eine höhere Auflösung bzw. Granularität der rekonstruierten Rohmessdaten benötigt. Somit bietet der Sensor und/oder der Verbrauchszähler bzw. das gesamte Netzwerk vorteilhafterweise eine erhöhte Flexibilität und Anpassbarkeit auf zukünftige Anforderungen.

Zweckmäßigerweise kann die dynamische Festlegung der Bedingungen für ein Generieren von Zeitstempelungen für den einzelnen Sensor und/oder Verbrauchszähler individuell vorgenommen werden, insbesondere bei einer Mehrzahl von Sensoren bzw. Verbrauchszählern. Die Festlegung der Bedingungen für ein Generieren von Zeitstempelungen kann für jeden Verbrauchszähler individuell vorgenommen werden. Jedem Sensor und/oder Verbrauchszähler kann somit ein individueller Wert vom Datensammler und/oder vom Head-End-System übertragen werden.

Vorzugsweise ist der rekonstruierte Rohmessdatenstrom in der Weiterfolge der Datenverarbeitung abgesehen von seiner zeitlichen Auflösung (Abtastrate oder Vielfaches der Abtastrate) jederzeit auf einer zeithistorischen Basis zeitlückenlos auswertbar. Daraus resultiert der Vorteil, dass z.B. auch in der Vergangenheit liegende ereignisbedingte Zustandsveränderungen im Versorgungsnetzwerk (wie z.B. Overflow, Underflow, Leckagen, Manipulationsversuche usw.) in genauer Zeitzuordnung und ohne Lücken feststellbar bzw. dokumentierbar sind. Durch eine hochgranulare zeitdiskrete Abtastung ist eine hohe Genauigkeit in der zeitlichen Auflösung gegeben. Ferner besteht die Möglichkeit, vergangene Verbrauchsdaten dem Verbraucher wesentlich genauer anzuzeigen und/oder bei Auswertungen hinsichtlich des Verbrauchsverhaltens bzw. Änderungen desselben besser miteinzubeziehen. Dies wiederum wirkt sich verbrauchsoptimierend aus und stellt für den Verbraucher eine besonders wichtige Information des Netzversorgers dar.

Bei den betreffenden aufeinanderfolgenden Rohmessdaten handelt es sich insbesondere um keine Berechnungen und/oder Auswertungen, sondern um elementare Messeinheiten.

Beispielsweise kann es sich bei elementaren Messeinheiten um die elektrische Spannung oder um die Stromstärke handeln, die gemessen werden. Beispielsweise kann die Ausgangsspannung eines Hallsensors im Falle seiner Anregung oder die Spannung eines Temperaturfühlers erfasst werden. Zweckmäßigerweise kann sich die gemessene physikalische Größe auf ein Versorgungsmedium, vorzugsweise Wasser, Strom, Treibstoff oder Gas, eines Versorgungsnetzes beziehen.

Es besteht die Möglichkeit, dass der oder einer der gemessene(n) physikalische(n) oder chemisch-physikalische(n) Parameter kennzeichnend ist für die Menge, die Qualität und/oder Zusammensetzung eines Fluids, das durch den betreffenden Sensor strömt oder von diesem kontaktiert wird.

Die elementare Messeinheit kann zweckmäßigerweise eine Zeitstempelung generieren, sobald die elementare Messeinheit einen Impuls empfängt.

Es besteht die Möglichkeit, dass der Rohmessdatenstrom eine zeitliche Auflösung besitzt, die durch die Sensor-Abtastrate bzw. Messelement-Abtastrate oder ein Vielfaches derselben festgelegt oder bedingt ist. Zweckmäßigerweise besitzt der Rohmessdatenstrom eine zeitliche Auflösung, die nur durch die Sensor-Abtastrate bzw. Messelement-Abtastrate oder ein Vielfaches derselben festgelegt oder zumindest bedingt ist. Die zeitliche Auflösung des Rohmessdatenstroms liegt vorzugsweise im Sekundenbereich, Zehntelsekundenbereich, Hundertstelsekundenbereich oder Tausendstelsekundenbereich.

Vorteilhafterweise ist der Rohmessdatenstrom unter Zugrundelegung der festgelegten Auflösung kontinuierlich und/oder vollständig. Daraus resultiert eine ganz besonders hohe Messwertauflösung entlang des kontinuierlichen Zeitverlaufs und daraus wiederum eine besondere Informationstiefe als Basis für darauf aufbauende Auswertungen bzw. Berechnungen.

Um den kontinuierlichen Rohmessdatenstrom zu erzeugen, werden die Daten-Pakete zweckmäßigerweise in einer entsprechenden Zeitabfolge-Referenz zusammengefügt oder zumindest zueinander in Relation gesetzt, sodass die in den Paketen enthaltenen Zeitstempelungen entlang der Realzeitachse entsprechend ihrer Abtastung und vorherigen Paketaufteilung später wieder zusammengefügt oder zumindest in eine fortlaufende zeitliche Relation zueinander gesetzt sind.

Die Festlegung der Frage, wann eine neue Datenübertragung in Form einer Nachricht oder eines Telegramms (eines oder mehrerer Datenpakete) durchzuführen ist, hängt erfindungsgemäß davon ab, ob mindestens die Bedingung b) der beiden Bedingungen
(a) Ablauf eines vorgegebenen Zeitintervalls und
(b) Erreichen einer vorgegebenen Menge an insbesondere komprimierten gesammelten Zeitstempelungen seit der vorherigen Übertragung
erfüllt ist. Aufgrund dessen kann eine Zeitabfolge-Referenz der zu übertragenden Daten-Pakete in einfacher Weise realisiert werden.

Besonders zweckmäßig ist, dass das Verfahren umfasst, die Zeitstempelungen durch Formatierung in Datenpaketen vorbestimmter fester Größe zu verpacken, wobei jedes Mal, wenn die akkumulierten Daten die Größe eines Datenpakets erreichen oder das vorgegebene Zeitintervall abgelaufen ist, eine neue Übertragung ausgelöst wird.

Es besteht die Möglichkeit, dass die Datenübertragung mit einer Redundanz durchgeführt wird. Zweckmäßigerweise kann die Redundanz in der Übertragung durch wiederholtes Senden desselben Datenpakets in mehreren aufeinanderfolgenden Übertragungsvorgängen oder auf unterschiedlichen Kommunikationswegen oder Funkkanälen erreicht werden. Es besteht ferner die Möglichkeit, dass die Redundanz in der Übertragung durch wiederholtes Senden derselben Zeitstempelungen erreicht wird. Beispielsweise kann die Übertragung eines Datenpakets oder einer Zeitstempelung fünf Mal wiederholt werden.

Vorteilhafterweise können die Zeitstempelungen komprimiert werden und die Komprimierung der Zeitstempelungen verlustfrei durchgeführt werden. Die Komprimierung der Zeitstempelungen kann im Bereich des Sensors bzw. des Verbrauchszählers verlustfrei durchgeführt werden. Die Übertragung der Zeitstempelungen kann zweckmäßigerweise in komprimierter Form und/oder über eine Funkstrecke erfolgen. Die Übertragung kann wiederholt und bedingt jeweils nach Ablauf eines vorgegebenen Zeitintervalls und/oder nach Erreichen einer vorgegebenen Menge an Zeitstempelungen, die seit einer vorherigen Übertragung angesammelt wurden, durchgeführt werden.

Alternativ kann die Komprimierung der Zeitstempelungen aber auch mit einem vorgegebenen, zulässigen Verlustniveau durchgeführt werden. Wird die Datenkomprimierung mit einem vorgegebenen zulässigen Verlustniveau durchgeführt, kann, wenn der Benutzer oder Betreiber eine Energieeinsparung bevorzugt und eine gewisse Ungenauigkeit bei der Wiederherstellung und Wiedergabe der ursprünglichen Messdaten akzeptiert (d.h. einen gewissen Verlust akzeptiert), das Komprimierungsverhältnis dann zum Nachteil einer geringeren Genauigkeit bei der Wiedergabe auf der Empfängerseite erhöht werden. Das Verlustverhältnis oder das Komprimierungsverhältnis kann als programmierbarer oder einstellbarer Parameter vorgesehen sein, der den Komprimierungsmodus bestimmt oder einstellt.

Als anschauliche und nicht beschränkende Beispiele für Datenkomprimierungsalgorithmen kann im Rahmen des erfindungsgemäßen Verfahrens in Betracht gezogen werden: eine differenzielle Komprimierung (Delta-Kodierung) in Verbindung mit einer Huffman-Kodierung, eine Lauflängenkodierung (RLE-Kodierung) oder vorzugsweise eine adaptive binäre arithmetische Kodierung (CABAC-Kodierung).

Nebengeordnet beansprucht die vorliegende Erfindung zudem einen Sensor, welcher hergerichtet ist für den lokalen Einsatz in einem eine Mehrzahl von lokalen Sensoren umfassenden Versorgungsnetz zur Verteilung eines Verbrauchsmediums, wie z.B. Wasser, Gas, Elektrizität, Treibstoff oder Wärme. Ein solcher Sensor kann Bestandteil eines Verbrauchszählers sein. Er ermöglicht es, im Rahmen des Betriebs eines Versorgungsnetzes den Verbrauch sowie weitere Zustandseigenschaften in sehr hoher Auflösung entlang des zeitlichen Verlaufs lückenlos und kontinuierlich zu gewährleisten.

Schließlich betrifft die vorliegende Erfindung auch ein Versorgungsnetz zur Verteilung eines Verbrauchsmediums wie z.B. Gas, Wasser, Elektrizität, Treibstoff oder Wärme mit mindestens einem lokalen Sensor vorzugsweise einer Mehrzahl von lokalen Sensoren zum Generieren und/oder Weiterleiten von Zeitstempelungen aufgrund von Rohmessdaten auf der Basis des Korrelierungsmodells, vorzugsweise Rohmessdaten in Zusammenhang mit einem Verbrauch an Verbrauchsmedium und/oder einem Betriebszustand eines Verbrauchszählers, mit einem Datensammler, einer primären Kommunikationsstrecke zwischen dem jeweiligen Sensor und dem Datensammler, einem Head-End zur Auswertung der Daten sowie einer tertiären Kommunikationsstrecke zwischen Datensammler und Head-End. Gemäß der vorliegenden Erfindung ist das Versorgungsnetz dadurch gekennzeichnet, dass ein Sensor nach Anspruch 19 vorgesehen ist.

### Beschreibung der Erfindung anhand von Ausführungsbeispielen

Nachstehend wird die vorliegende Erfindung anhand verschiedener Ausführungsbeispiele näher erläutert. Es zeigen:
- Fig. 1: eine stark vereinfachte schematische Darstellung eines Beispiels von Kommunikationsstrecken eines Versorgungsnetzes zum Sammeln und/oder Weiterleiten von Daten, die von einer Vielzahl von Verbrauchszählern aufgenommen werden, an einen Datensammler und ein Head-End;
- Fig. 2: eine stark vereinfachte schematische Darstellungsweise eines Beispiels der Übertragung von Zeitstempelungen charakteristischer Rohmessdaten über die primäre Kommunikationsstrecke von Fig. 1 zum Datensammler;
- Fig. 3: ein Beispiel für eine Nachrichtenstruktur, die von der Messdatenaufbereitung des Verbrauchszählers gemäß Fig. 2 über die primäre Kommunikationsstrecke emittiert bzw. abgefragt wird;
- Fig. 4: ein Beispiel für ein Chronogramm von Zeitstempelungen von den von einem Sensor ausgelesenen Rohmessdaten zwischen zwei Uplink-Übertragungsvorgängen (Nachrichten oder Telegramme, die zu den Zeitpunkten T_{E-1} und T_{E} emittiert werden), in einem Kontext der Fernablesung des Volumenverbrauchs (in diesem Fall enthält das Paket PAⱼ N Zeitstempelungen TS_{N});
- Fig. 5: ein Beispiel eines Sensors eines Verbrauchszählers in Form eines mechanischen Durchflusszählers mit einem Flügelrad, mit dem entsprechende Rohmessdaten für den Durchfluss erzeugt werden können;
- Fig. 6: ein Beispiel eines Korrelationsmodells zur Generierung von Zeitstempelungen auf Basis der von dem Sensor gemäß Fig. 5 erfassten Rohmessdaten;
- Fig. 7: ein Beispiel eines Temperatursensors in vereinfachter Darstellung;
- Fig. 8: ein weiteres Beispiel eines Korrelationsmodells zur Generierung von Zeitstempelungen auf Basis der von dem Sensor gemäß Fig. 7 erfassten Rohmessdaten.
- Fig. 9a-b: Beispiele für Korrelationsmodelle zur Generierung von Zeitstempelungen auf Basis der von einem Sensor ausgelesenen Rohmessdaten mit Skalierungsfaktoren;
- Fig. 10: eine stark vereinfachte schematische Darstellungsweise der Auswirkung verschiedener Skalierungsfaktoren auf die Datenmenge;
- Fig. 11: Beispiele für Nachrichtenstrukturen, die aufgrund unterschiedlicher Skalierungsfaktoren verschiedene Paketgrößen PAⱼ aufweisen;
- Fig. 12a-b: stark vereinfachte schematische Darstellungsweisen der Netzwerkstrukturen mit Head-End, Verbrauchszählern, sowie in einer Ausgestaltung mit Datensammlern; sowie
- Fig. 13: ein Beispiel für das Zusammenfügen der die Zeitstempelungen enthaltenen Datenpakete bzw. Nachrichten bzw. Telegramme sowie Rekonstruktionen zu einem zeitkontinuierlichen Rohmessdatenstrom einschließlich dessen Auswertemöglichkeiten in stark vereinfachter schematischer Darstellungsweise.

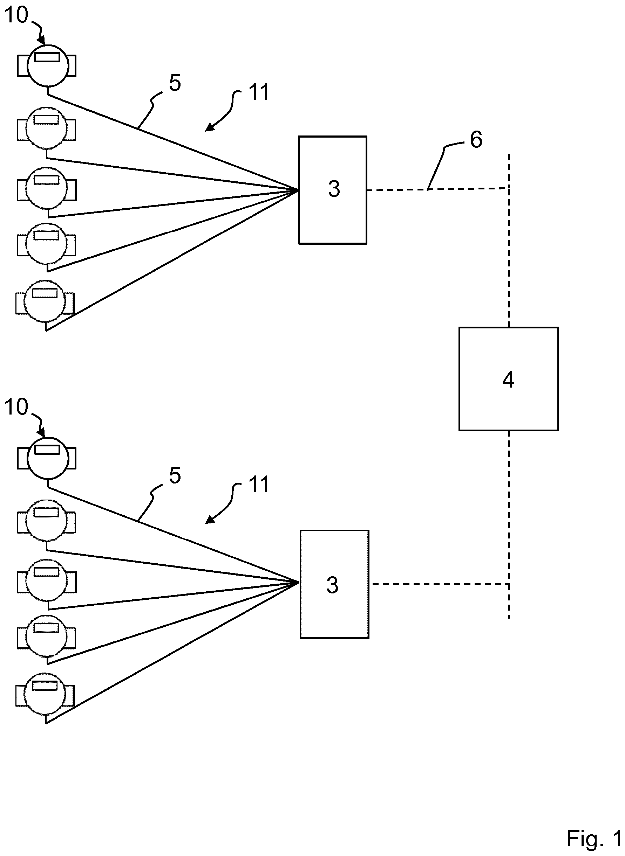

Fig. 1 zeigt ein Versorgungsnetz zur Verteilung von Verbrauchsmedien, wie z.B. Gas, Wasser, Elektrizität, Treibstoff oder Wärme. Das Versorgungsnetz umfasst eine Vielzahl von einzelnen lokalen Verbrauchszählern 10, die z.B. unterschiedlichen Wohneinheiten eines Mehrfamilienhauses zugeordnet sein können. Die einzelnen Verbrauchszähler 10, z. B. Wasserzähler, Wärmezähler, Elektrizitätszähler oder Gaszähler, sind über eine drahtlose Kommunikationsstrecke mit einem Datensammler 3, der als Master bzw. Konzentrator fungieren kann, verbunden.

Jeder einzelne Verbrauchszähler 10 kann zweckmäßigerweise mit einer zugehörigen ID (Adresse) versehen sein, sodass jeder einzelne Verbrauchszähler 10 vom Datensammler 3 direkt adressiert werden kann und die im jeweiligen Verbrauchszähler 10 vorhandenen Daten abgerufen werden können.

Die Übertragung über die primäre Kommunikationsstrecke 5 wird durch ein BUS-Übertragungsprotokoll vorgegeben, wie z.B. durch das wireless M-BUS-Übertragungsprotokoll.

Der jeweilige Datensammler 3 steht über eine tertiäre Kommunikationsstrecke 6 mit einem sogenannten Head-End 4 in Verbindung. Im Head-End 4 laufen die Daten des gesamten Versorgungsnetzes zusammen. Bei der tertiären Kommunikationsstrecke 6 kann es sich um eine drahtgebundene Kommunikationsstrecke oder um eine auf Funktechnologie basierende Kommunikationsstrecke (z.B. Mobilfunk-Kommunikationsstrecke) handeln. Alternativ können die Daten des jeweiligen Datensammlers 3 bei Bedarf auch von einer portablen Leseeinrichtung ausgelesen und am Head-End 4 wieder eingelesen werden. Die Daten können entlang der tertiären Kommunikationsstrecke 6 auf unterschiedliche Art und Weise übertragen werden, beispielsweise via LAN, GPRS, LTE, 3G usw.

Die einzelnen Verbrauchszähler 10 können mit einer eigenständigen Energieversorgung (Akku) betrieben werden.

Wie in Fig. 1 schematisch dargestellt, werden die vorzugsweise komprimierten und formatierten Zeitstempelungen TS jedes betreffenden Sensors 1 bzw. Verbrauchszählers 10 an den Datensammler 3, der ein lokales Netzwerk einer Vielzahl von ihm zugeordneten Verbrauchszählern 10 bzw. Sensoren 1 verwaltet, übertragen. Von dem Datensammler 3 werden die vorzugsweise komprimierten und formatierten Zeitstempelungen TS jedes der Sensoren 1, die Teil des Versorgungsnetzes sind, an das Head-End 4 übertragen.

Der Datensammler 3 kann die von den jeweiligen Sensoren 1 bzw. Verbrauchszählern 10 abgerufenen Zeitstempelungen TS entweder über ein Zeitintervall (z.B. einen Tag) speichern und dann an einen Verarbeitungsstandort bzw. an das Head-End 4 weiterleiten. Alternativ können die Daten vom Datensammler 3 auch sofort an das Head-End 4 weitergeleitet werden.

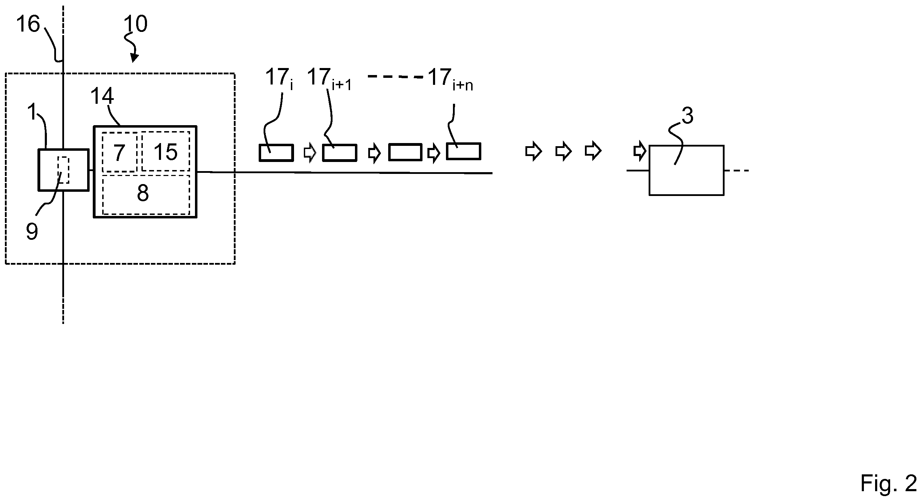

Gemäß Fig. 2 umfasst der jeweilige Verbrauchszähler 10 einen mit mindestens einem Messelement 9 ausgestatteten Sensor 1. Der Sensor 1 ist dazu vorgesehen, über das Messelement 9 Rohmessdaten zu erzeugen, die einer Messdatenaufbereitung 14 zugeführt werden. Die Rohmessdaten entsprechen vom Messelement 9 gelieferten elementaren Messeinheiten der mindestens einen physikalischen oder physikalisch-chemischen Größe oder des mindestens einen physikalischen oder physikalisch-chemischen Parameters. Bei den Rohmessdaten kann es sich beispielsweise um Rohdaten in Zusammenhang mit dem Durchfluss eines Mediums durch eine Versorgungsleitung 16, z.B. Wasserleitung, handeln, insbesondere die Durchflussmenge, die Trübung, das Vorhandensein von Schadstoffen oder das Vorhandensein eines festen und/oder gasförmigen Anteils bzw. fester und/oder gasförmiger Anteile.

Die Messwertaufbereitung 14 des Verbrauchszählers 10 umfasst Speichermittel 7, eine Zeitreferenzeinrichtung 15 (Quarz) sowie einen Mikroprozessor 8. Die vorgenannten Komponenten können getrennt oder als integrierte Gesamtkomponente vorgesehen sein. Der Verbrauchszähler 10 kann eine (nicht dargestellte) eigene Stromversorgung in Form einer Batterie oder dergleichen bei Bedarf umfassen. Somit kann der Verbrauchszähler 10 energieautark betrieben werden.

Im Vorfeld zu den in Fig. 2 dargestellten Schritten werden im Rahmen des Korrelierungsmodells ein bestimmter Wert, eine bestimmte Wertänderung oder eine bestimmte Wertdifferenz der mindestens einen physikalischen oder physikalisch-chemischen Größe oder des mindestens einen physikalischen oder physikalisch-chemischen Parameters für die Zuordnung einer Zeitstempelung TS festgelegt.

Erfindungsgemäß erfolgen im Bereich des jeweiligen Verbrauchszählers 10 folgende Schritte:
- Auslösen einer Zeitstempelung TS bei einem Erfassen des bestimmten Werts, der bestimmten Wertänderung oder der bestimmten Wertdifferenz durch das Messelement 9.
- Abspeichern der Zeitstempelungen TS in den Speichermitteln 7 des Sensors 1 bzw. des Verbrauchszählers 10.
- Übertragen der Zeitstempelungen TS, vorzugsweise in komprimierter Form, über eine Funkstrecke 11, indem in der Messdatenaufbereitung 14 Zeitstempelung-Telegramme 17ᵢ, 17ᵢ₊₁, 17ᵢ₊ₙ vorbereitet werden, die sukzessive an eine zentrale Verarbeitungsanlage, wie z. B. ein Head-End 4, übertragen werden.

Dementsprechend werden zeitlich nacheinander Datentelegramme 17ᵢ, 17ᵢ₊₁, ...., 17ᵢ₊ₙ übertragen, die fortlaufende Zeitstempelungen TS enthalten. Aus diesen Zeitstempelungen TS kann empfängerseitig unter Anwendung des Korrelierungsmodells ein kontinuierlicher lückenloser Rohmessdatenstrom von sehr hoher Auflösung rekonstruiert werden.

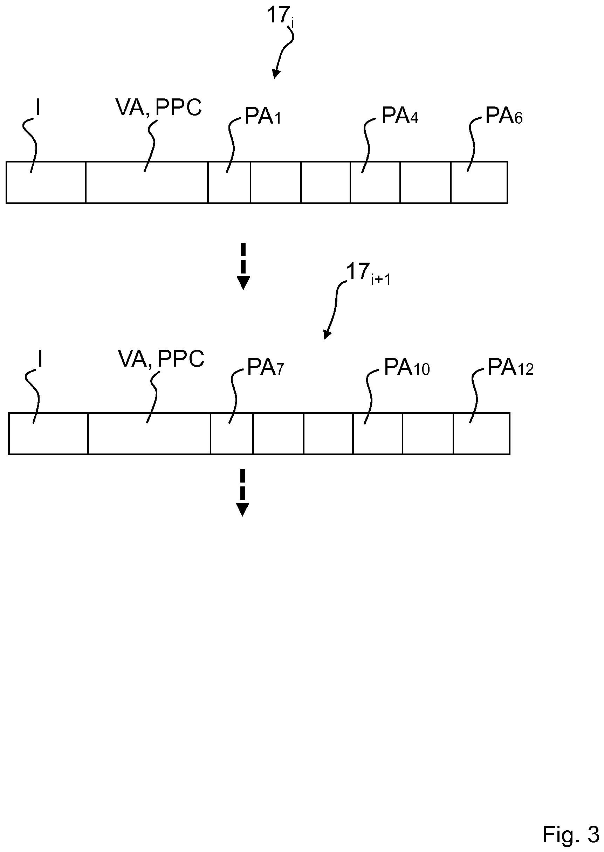

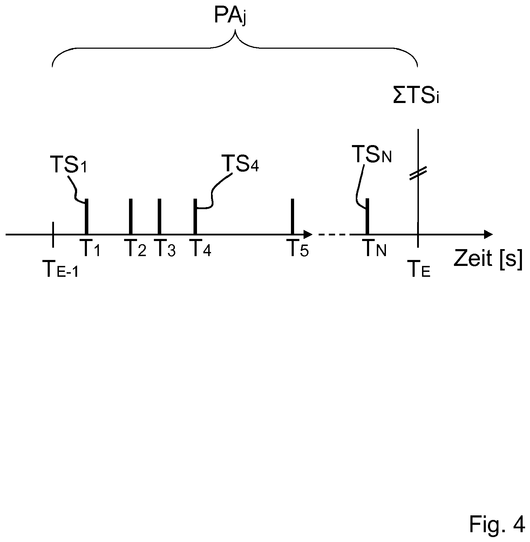

Wie in Figur 3 beispielhaft dargestellt, kann zudem vorgesehen sein, zusammen mit den PAⱼ-Paketen der Zeitstempelungen TS auch die Identität (Adresse) I des betreffenden Sensors 1 und/oder den absoluten oder kumulierten Wert VA der bzw. des vom betreffenden Sensor 1 gemessenen physikalischen oder physikalisch-chemischen Größe oder Parameters in dem jeweiligen Datentelegramm 17ᵢ, 17ᵢ₊₁, ...., 17ᵢ₊ₙ zu übertragen, wobei der Wert VA mit einem Zeitstempel versehen oder einem der elementaren zeitgestempelten Messdaten, beispielsweise einem Indexwert eines Fluidzählers zugeordnet sein kann. Der Wert VA kann - gemäß Ausführungsbeispiel - z. B. der Zählerstand eines Wasserzählers zu einem bestimmten Zeitpunkt oder die Durchflussmenge durch den Wasserzähler seit einer vorherigen Datenübertragung (z. B. entspricht die Summe Σ der Zeitstempelungen TSᵢ der Summe Σ der Durchflussmenge; siehe Figur 4) sein.

Das Verfahren kann auch darin bestehen, mit den PAⱼ-Paketen von Zeitstempelungen TS den Wert mindestens eines anderen physikalischen oder physikalisch-chemischen Parameters PPC der Umgebung des betreffenden Sensors 1 oder des von diesem letzteren gemessenen Fluids zu einem bestimmten Zeitpunkt auszulesen und zu übertragen, wie beispielsweise die Leitfähigkeit des Fluids, die Temperatur des Fluids, den pH-Wert des Fluids, den Druck des Fluids, und/oder einen Parameter, der für die Qualität und/oder die Zusammensetzung des Fluids und/oder die Temperatur der Einbauumgebung des Sensors 1 kennzeichnend ist.

Fig. 3 zeigt beispielhaft die einzelnen Datentelegramme 17ᵢ, 17ᵢ₊₁, ...., 17ᵢ₊ₙ gemäß Fig. 2 etwas detaillierter. Die Datentelegramme 17ᵢ, 17ᵢ₊₁, ...., 17ᵢ₊ₙ umfassen jeweils zum einen eine Mehrzahl von Datenpaketen PA₁-PA₆ bzw. PA₇-PA₁₂, den absoluten oder kumulierten Wert VA, die Identität (Adresse) I des betreffenden Sensors 1 sowie den Wert mindestens eines anderen physikalischen oder physikalisch-chemischen Parameters PPC der Umgebung des betreffenden Sensors 1 oder des von letzterem zu einem bestimmten Zeitpunkt gemessenen Fluids, wie z.B. die Leitfähigkeit des Fluids, die Temperatur des Fluids, den pH-Wert des Fluids, den Druck des Fluids, einen Parameter, der für die Qualität und/oder die Zusammensetzung des Fluids und/oder die Temperatur der Einbauumgebung des Sensors 1 kennzeichnend ist.

Wie in Fig. 3 weiterhin als Beispiel dargestellt ist, kann vorgesehen sein, die komprimierten Zeitstempelungen TS durch Formatierung der PAⱼ-Pakete, deren Größe einen vorgegebenen Maximalwert nicht überschreiten darf, zu verpacken, wobei jedes Mal, wenn die akkumulierten Daten die Größe eines Pakets PAⱼ erreichen, ein neues Paket bzw. Telegramm gebildet wird bzw. eine neue Übertragung ausgelöst wird, sofern das vorgegebene Zeitintervall nicht vorher abgelaufen ist.

Gemäß einer bevorzugten Variante der Erfindung werden die Zeitstempelungen TS vor deren Übertragung komprimiert. Die Komprimierung der Zeitstempelungen TS kann verlustfrei durchgeführt werden.

Alternativ kann die Komprimierung der Zeitstempelungen TS auch mit einem vorgegebenen zulässigen Verlustniveau durchgeführt werden. In der Tat kann, wenn der Benutzer oder Betreiber eine Energieeinsparung bevorzugt und eine gewisse Ungenauigkeit bei der Wiederherstellung und Wiedergabe der ursprünglichen Rohmessdaten akzeptiert (d. h. einen gewissen Verlust akzeptiert), das Komprimierungsverhältnis dann zum Nachteil einer geringeren Genauigkeit bei der Wiedergabe auf der Empfangsseite erhöht werden. Dieses Verlustverhältnis oder das Komprimierungsverhältnis kann als programmierbarer oder einstellbarer Parameter vorgesehen werden, der den Komprimierungsmodus bestimmt oder einstellt.

Als anschauliche und nicht beschränkende Beispiele für Datenkomprimierungsalgorithmen kann im Rahmen des erfindungsgemäßen Verfahrens in Betracht gezogen werden, eine differentielle Kodierung (Delta-Kodierung) in Verbindung mit einer Huffman-Kodierung, eine Lauflängenkodierung (RLE-Kodierung) oder vorzugsweise eine adaptive binäre arithmetische Kodierung (CABAC-Kodierung) anzuwenden.

Es besteht die Möglichkeit, dass die Zeitstempelungen TS in den Speichermitteln 7 des Verbrauchszählers 10 erst dann gelöscht werden, wenn die Übertragung der Zeitstempelungen TS vom Empfänger bzw. Datensammler 3 bestätigt worden ist.

Dank der Erfindung ist es möglich, am Datensammler 3 bzw. Empfangsort (z. B. Head-End 4) über Informationen zu verfügen, die eine originalgetreue und vollständige Rekonstruktion aller von den verschiedenen Sensoren 1 gelieferten Zeitstempelungen TS in sehr hoher zeitlicher Auflösung ermöglichen und eine unbegrenzte Flexibilität bei der Auswertung dieser Daten zulassen. So kann man einfach und zentral die Erweiterungsfähigkeit von "Business"-Funktionen berücksichtigen, ohne die Funktionsweise oder gar den Aufbau von Baugruppen (Sensoren, Kommunikationsmittel, und dergleichen) zu beeinflussen.

Der Aufbau des Sensors 1 kann im Vergleich zu bisher bekannten Lösungen einfacher und sein Betrieb sicherer sein. Ferner ist der Energieverbrauch der Baugruppe aus dem Sensor 1 und den Kommunikationsmitteln 2 geringer als bei den aktuellen Ausführungen, welche die Daten lokal auswerten.

Die Erfindung kann auf die Messung und Fernauslesung verschiedenster Parameter und Größen angewendet werden. Es genügt, eine elementare (vom Sensor 1 messbare) Veränderung eines Parameters oder einer Größe in Übereinstimmung mit der Auflösung des betrachteten Sensors 1 genau datieren zu können (die Zeitstempelung TS kann der Auflösung des Sensors 1 oder möglicherweise einem Vielfachen dieser Auflösung entsprechen).

Wenn sich die gemessene Größe oder der gemessene Parameter auch dekrementell ändern kann, sind die Zeitstempelungen TS mit Vorzeichen versehene elementare Maßeinheiten (positive oder negative Einheiten).

Im Zusammenhang mit einer vorteilhaften Anwendung der Erfindung, verbunden mit dem Begriff des Verbrauchs, kann vorgesehen sein, dass die oder eine der gemessenen physikalischen Größe(n) sich auf ein Strömungsmedium bezieht, wobei jede Zeitstempelung TS einer elementaren Fluidmenge entspricht, die durch den Sensor 1, abhängig von seiner Messgenauigkeit, gemessen wird. Das gemessene Fluid kann beispielsweise Gas, Wasser, Kraftstoff oder eine chemische Substanz sein.

Alternativ oder kumulativ zu der oben genannten Ausführungsvariante kann die Erfindung auch vorsehen, dass die oder eine der gemessene(n) physikalischchemische(n) Größe(n) ausgewählt ist aus der Gruppe, die gebildet wird durch die Temperatur, den pH-Wert, die Leitfähigkeit und den Druck eines durch den betreffenden Sensor 1 hindurchströmenden oder von diesem kontaktierten Fluids.

Wenn alternativ oder kumulativ mindestens ein Parameter gemessen wird, kann dieser oder einer dieser gemessene(n) physikalische(n) oder physikalisch-chemische(n) Parameter kennzeichnend sein für die Qualität und/oder Zusammensetzung eines Fluids, das den betreffenden Sensor 1 durchströmt oder mit ihm in Kontakt kommt, wie z. B. Trübung, das Vorhandensein von Schadstoffen oder das Vorhandensein eines festen und/oder gasförmigen Anteils bzw. fester und/oder gasförmiger Anteile.

Die oben genannten Größen und Parameter sind selbstverständlich nur Beispiele, die nicht beschränkend sind.

Dementsprechend werden fortlaufend Datentelegramme 17 zu einem bestimmten Zeitpunkt gebildet und sukzessive übertragen. Die einzelnen Datenpakete PA₁, ..., PAₙ bilden im Anschluss daran in ihrer Summe einen fortlaufenden zeitgestempelten Rohmessdatenstrom 13.

Fig. 4 zeigt exemplarisch ein Beispiel für eine Nachrichtenstruktur, die vom Sensor 1 bzw. Verbrauchszähler 10 an den Datensammler 3 bzw. an das Head-End 4 übertragen wird. Jede Zeitstempelung TS, bis TS_{N} entspricht hierbei im Rahmen des Korrelierungsmodells einer elementaren Fluidmenge, die durch den Sensor 1 gemessen wird. Das gemessene Fluid kann beispielsweise Gas, Wasser, Kraftstoff oder eine chemische Substanz sein. In dem Zeitintervall T_{E-1} bis T_{E} werden so N Impulse gemessen und die Zeitstempelungen TS₁ bis TS_{N} gespeichert, was bei einer Menge von z. B. einem Liter pro Zeitstempelung TS einer Durchflussmenge von insgesamt N Liter innerhalb dieses Zeitintervalls entspricht. Die Messwertaufbereitung bildet ein Datenpaket PAⱼ, welches N Zeitstempelungen TS₁ bis TS_{N} enthält. Aus der Mehrzahl von Datenpaketen z. B. PA₁ bis PA₆ bzw. PA₇ bis PA₁₂ werden gemäß Fig. 3 Datentelegramme 17ᵢ, 17ᵢ₊₁ gebildet.

Damit sich das erfindungsgemäße Verfahren an Veränderungen in der Entwicklung des Parameters oder der Messgröße anpassen kann und gleichzeitig eine zufriedenstellende Aktualisierung der verfügbaren Momentandaten gewährleistet ist, kann das Verfahren vorteilhafterweise insbesondere darin bestehen, ein neues Paket bzw. Telegramm 17 zu bilden bzw. eine neue Datenübertragung in Form einer Nachricht oder eines Telegramms durchzuführen, sobald mindestens die nachfolgende Bedingung b) erfüllt ist:
(a) Ein vorgegebenes Zeitintervall ist abgelaufen und/oder
(b) eine vorgegebene Menge an insbesondere komprimierten gesammelten Daten bzw. Zeitstempelungen TS seit der vorherigen Übertragung ist erreicht.

Die Anwendung der genannten Bedingung (b) kann beispielsweise darin bestehen, nachdem eine vorgegebene Anzahl neuer Zeitstempelungen TS erstellt wurde, regelmäßig die Größe aller neuen Zeitstempelungen TS in komprimierter oder verdichteter Form zu überprüfen. Wenn diese Größen nahe einer kritischen Größe liegen, beispielsweise nahe der Größe eines durch das Übertragungsprotokoll festgelegten Pakets, wird ein neuer Übertragungsvorgang durchgeführt (Bedingung (b) vor Bedingung (a) erfüllt), es sei denn, das vorgegebene Zeitintervall zwischen zwei aufeinanderfolgenden Übertragungen ist zuerst abgelaufen (Bedingung (a) vor Bedingung (b) erfüllt).

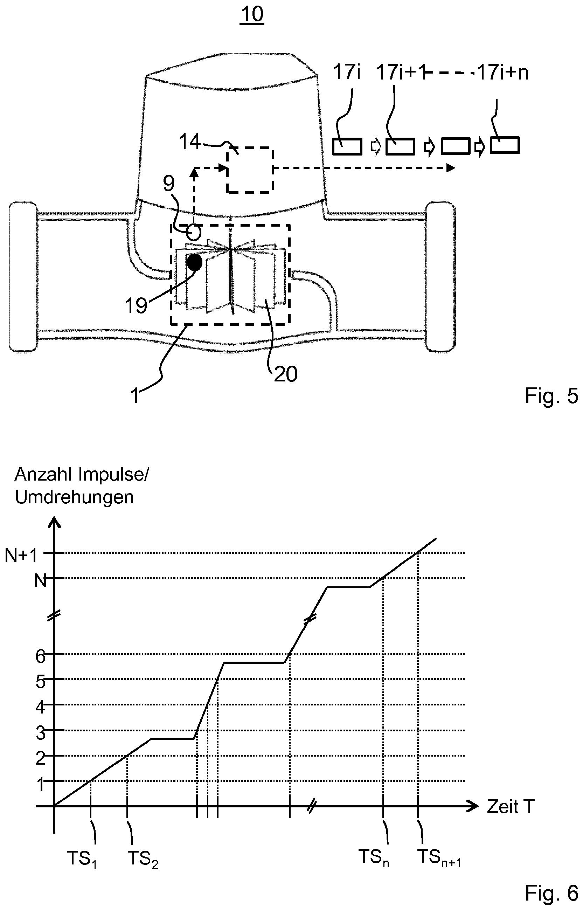

In Fig. 5 ist lediglich beispielhaft ein mechanischer Durchflusszähler 10 mit einem Sensor 1 für den Durchfluss dargestellt. Der Sensor 1 umfasst ein Flügelrad 20, ein Messelements 9 in Form z.B. eines Hallsensors sowie ein Impulsgeberelement 19, welches sich abhängig von dem Durchfluss durch den Durchflusszähler 10 hindurch mehr oder weniger dreht. Die Drehbewegung des Flügelrads 20 wird von dem Messelement 9 als Spannungswert erfasst, der von dem Impulsgeberelement 19 angeregt wird, sofern sich der betreffende Flügel des Flügelrads 20 in der Position des Messelements 9 befindet. Durch das Korrelierungsmodell ist beim Auswerten bekannt, welchem Durchflussvolumen eine Umdrehung entspricht. So kann eine Umdrehung des Flügelrades 20 z.B. einem Liter an Fluid entsprechen.

In der Messwertaufbereitung 14 ist ein Korrelierungsmodell hinterlegt, mit dem die Bedingungen für das Generieren von Zeitstempelungen TS bei bestimmten Rohmesswerten vorher festgelegt sind. Fig. 6 zeigt ein vereinfacht dargestelltes Beispiel eines solchen Korrelierungsmodells z. B. für eine fortlaufende kumulierende Durchflussmessung. Die Messeinheit ist hierbei z. B. ein vom Messelement 9 des in Fig. 5 dargestellten Sensors 1 erfasster Impuls z. B. ein Spannungsimpuls, der einer Umdrehung des Flügelrades 20 entspricht. Die vordefinierte Auflösung des Messverfahrens entspricht daher in diesem Beispiel einer Umdrehung des Flügelrads 20. Die Rohmesswerte, also die durch die Umdrehungen ausgelösten Impulse sowie die zugehörige Zeiten T, werden in den Speichermitteln 7 des Sensors 1 abgespeichert. Die Messwertaufbereitung 14 generiert für jeden Rohmesswert (d. h. für jede Umdrehung/Impuls) eine zugehörige Zeitstempelung TS₁, TS₂...... bis TSₙ₊₁. Die Zeitstempelungen TS werden fortlaufend in den Speichermitteln 7 abgelegt. Dreht sich das Flügelrad 20 nicht, wird kein Impuls erzeugt und somit auch keine Zeitstempelung vorgenommen. Dreht sich das Flügelrad 20 langsamer, erfolgt der Zeitpunkt der Erfassung des Impulses entlang der Zeitachse T entsprechend später. Dementsprechend wird in diesem Fall eine spätere Zeitstempelung TS erzeugt. Wie aus Fig. 6 ersichtlich, werden somit eine Vielzahl von Zeitstempelungen TS generiert, die den über die betreffende Zeitspanne kontinuierlich gemessenen Durchfluss definieren.

Die Zeitstempelungen TS werden in Datenpaketen PAⱼ zusammengefasst und gemäß Fig. 2 als Datentelegramme 17ᵢ, 17ᵢ₊₁, 17ᵢ₊ₙ sukzessive nach Aufforderung durch den Datensammler 3 über die primäre Kommunikationsstrecke 5 an diesen übertragen. Die Datenübertragung kann hierbei vorzugsweise in komprimierter Form erfolgen. Es handelt es sich folglich um einen kontinuierlichen lückenlosen Zeitstempelungs-Datenstrom von sehr hoher Auflösung, der in Form der einzelnen fortlaufenden Datentelegramme 17ᵢ, 17ᵢ₊₁, ...., 17ᵢ₊ₙ entlang der primären Kommunikationsstrecke 5 übertragen wird.

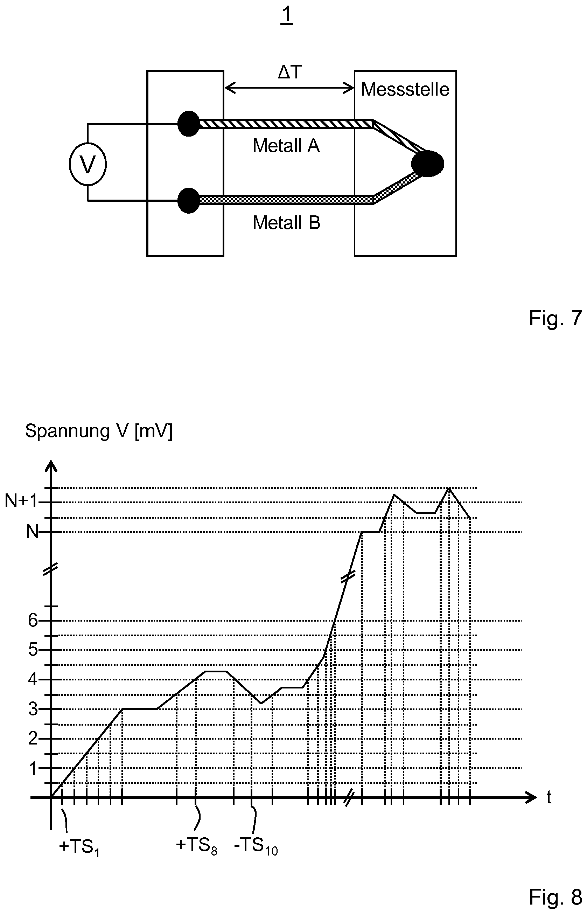

Die Sammlung von Daten ist nicht auf eine Durchflussmessung beschränkt. Fig. 7 zeigt beispielsweise einen Sensor 1 in Form eines auf Widerstandsmessung basierenden Temperaturfühlers. Der Temperaturfühler umfasst zwei im Bereich einer Messstelle miteinander verbundener Metallleiter (A, B) mit unterschiedlicher Wärmeleitfähigkeit. Im Falle eines Temperaturunterschieds ΔT zwischen der Messstelle und dem gegenüberliegenden Ende der beiden Leiter kann eine Spannung V bzw. Spannungsänderung abgegriffen werden. In diesem Fall kann als Korrelierungsmodell eine Zeitstempelung TS für eine Änderung der vom Sensor erfassten Spannung festgelegt werden.

Fig. 8 zeigt ein Beispiel für eine entsprechende Rohmessdatenkurve von Spannungswerten V zur Generierung von entsprechenden Zeitstempelungen TS bei einer Temperaturmessung. Dementsprechend wird bei jedem Anstieg oder Abfall der Spannung z. B. um 0,5 mV eine zugehörige Zeitstempelung TS generiert. Die festgelegte Auflösung des Verfahrens beträgt somit 0,5 mV. Da der Kurvenverlauf bei einer Temperaturmessung aufsteigend sowie abfallend sein kann, werden in diesem Fall die Zeitstempelungen mit einem Vorzeichen "+" für ansteigend oder "-" für abfallend versehen. Wie aus Fig. 8 deutlich wird, erhält man auch hier eine kontinuierliche Abfolge von Zeitstempelungen TS, die den gemessenen Spannungsverlauf und somit die Temperatur über den betrachteten Zeitraum sehr genau und lückenlos abbilden. Ändert sich die Temperatur d. h. die Spannung V nicht, wird keine Zeitstempelung generiert. Im Übrigen entspricht das Verfahren den in Zusammenhang mit dem eingangs beschriebenen Beispiel der Durchflussmessung dargelegten Maßnahmen.

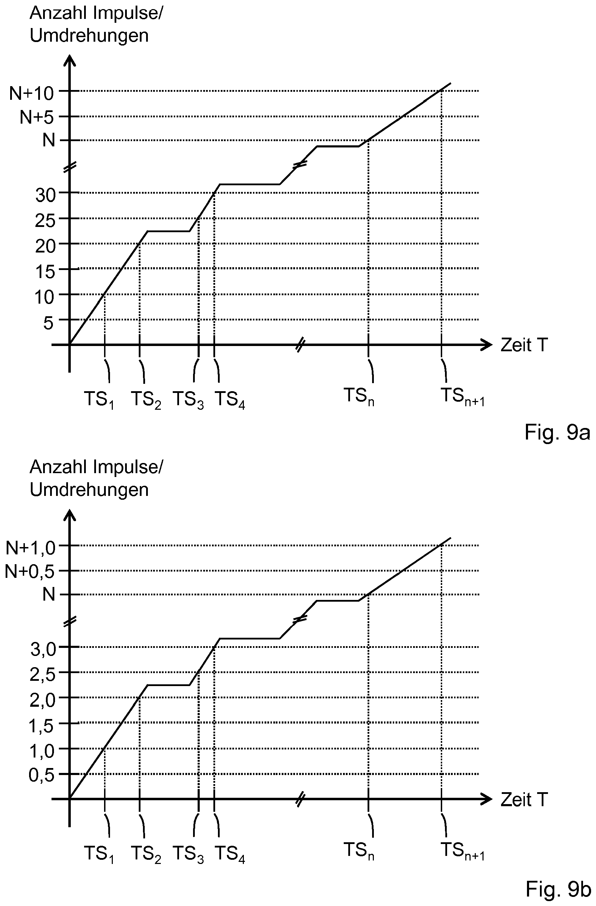

Fig. 9a zeigt exemplarisch ein Beispiel für ein weiteres Korrelierungsmodell zum Verbrauchszähler aus Fig. 5. Jede Zeitstempelung TS entspricht hierbei beispielsweise einer mit einem Skalierungsfaktor F versehenen elementaren Fluidmenge, die durch den Sensor 1, abhängig von seiner Messgenauigkeit, gemessen wird. Das gemessene Fluid kann beispielsweise Gas, Wasser, Kraftstoff oder eine chemische Substanz sein. Die in Fig. 9a gezeigten Zeitstempelungen TS₁-TS_{N+1} entsprechen daher in diesem Beispiel einer Umdrehung des Flügelrads 20 multipliziert mit dem entsprechenden Skalierungsfaktor F. So kann jede der Zeitstempelungen TS₁-TS_{N+1} jeweils einer Durchflussmenge von z.B. einem Liter multipliziert mit einem für jede Zeitstempelung TS₁-TS_{N+1}individuellen Skalierungsfaktor F durch einen Fluid-Verbrauchszähler 10, mithin der Messauflösung des in dem Fluid-Verbrauchszähler 10 befindlichen Messelements (z.B. eines Flügelrads oder eines Ringkolbenmesselements) entsprechen.

Für die Bedingungen für ein Generieren von Zeitstempelungen TS ist bis zum Zeitpunkt T₂ ein Skalierungsfaktor F von 10 festgelegt, so dass jede Zeitstempelung TS₁ und TS₂ beispielsweise einer Durchflussmenge von 10 Litern entspricht, vorausgesetzt die elementare Messeinheit bzw. eine Umdrehung des Flügelrades 20 entspricht z. B. 1 Liter. Zu den Zeitpunkten T₃ und T₄ sind die elementaren Messeinheiten mit dem Faktor 5 versehen, was z. B. einer Durchflussmenge von 5 Litern entspricht. Der Skalierungsfaktor F kann innerhalb eines Datenpakets PAⱼ beliebig geändert werden, so dass beispielsweise aufeinander folgende Zeitstempelungen TS₁-TS_{N+1} unterschiedliche Skalierungsfaktoren F aufweisen.

Ein Datenpaket PAⱼ enthält N Zeitstempelungen TS₁-TS_{N+1}. Somit ist die Größe bzw. die Datenmenge der Datenpakete PAⱼ von den verwendeten bzw. festgelegten Skalierungsfaktoren F der Zeitstempelungen TS abhängig. Ein Skalierungsfaktor F größer 1 hat zur Folge, dass die rekonstruierten Rohmessdaten eine geringere Auflösung bzw. Granularität aufweisen. Allerdings kann dadurch die Größe der Datenpakete PAⱼ reduziert werden und die zu übertragende Datenmenge somit verringert werden.

Fig. 9b zeigt eine weitere Ausgestaltung eines Korrelierungsmodells zum Verbrauchszähler aus Fig. 5 mit einem Skalierungsfaktor F kleiner 1. Zu den Zeitpunkten T₃ und T₄ wird somit bereits bei der Hälfte einer elementaren Messeinheit eine Zeitstempelung TS generiert. Das Flügelrad 20 kann hierfür beispielsweise zwei oder mehr Impulsgeberelemente 19 aufweise, so dass auch Teilumdrehungen des Flügelrades 20 erfasst werden können. Ein Skalierungsfaktor kleiner 1 hat andererseits zur Folge, dass die rekonstruierten Rohmessdaten eine höhere Auflösung bzw. Granularität aufweisen. Im Gegenzug kann sich dadurch die Größe der Datenpakete PAⱼ erhöhen, was wiederum die zu übertragende Datenmenge erhöhen kann. Sofern beispielsweise eine Anwendung eine erhöhte Auflösung der rekonstruierten Rohmessdaten erfordert, kann in einfacher Weise der Skalierungsfaktor F angepasst werden.

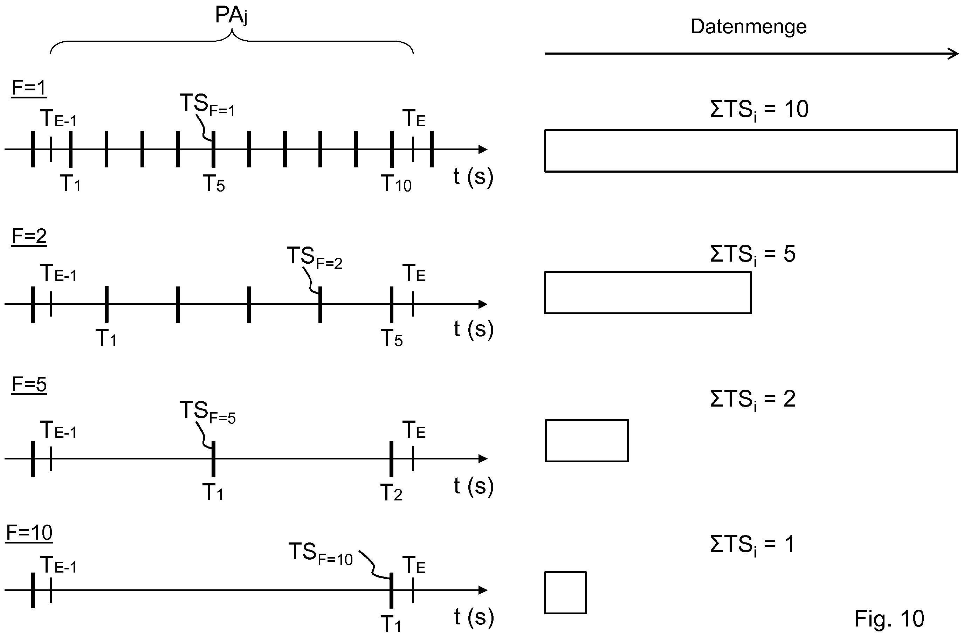

In Fig. 10 ist die Auswirkung des Skalierungsfaktors F auf die Datenmenge gezeigt. Innerhalb eines jeweiligen Datenpaktes PAⱼ ist zur einfacheren Veranschaulichung der Skalierungsfaktor F nicht geändert worden. Dies ist nicht als Einschränkung zu verstehen, da innerhalb eines Datenpaktes PAⱼ der Skalierungsfaktor F beliebig geändert werden kann, wie dies in Fig. 9a und 9b dargestellt ist. Zudem wird zur besseren Vergleichbarkeit zwischen den verschiedenen Skalierungsfaktoren F die gleiche Menge des zu messenden Verbrauchsguts während der gleichen Zeitspanne T_{E-1} bis T_{E}, mit einem konstanten Durchfluss angenommen. Bei einer zu messenden Menge eines Verbrauchsguts von beispielsweise 10 Litern in einer gleichen Zeitspanne T_{E-1} bis Tε führen unterschiedliche Skalierungsfaktoren F zu unterschiedlichen Zeitstempelungen TS. Für einen Skalierungsfaktor von F = 1 ergibt sich so beispielsweise eine elementare Messeinheit von 1 Liter. Allerdings kann sich die elementare Messeinheit beispielsweise auch auf die Bewegung des Flügelrades 20 in einem Fluid-Verbrauchszähler 10 beziehen, so wie in Fig. 5 und 6 dargestellt. Die elementare Messeinheit ist demnach nicht auf physikalische Einheiten wie z. B. Liter beschränkt. Somit werden in der Zeitspanne T_{E-1} bis T_{E} 10 elementare Messeinheiten gemessen und entsprechende Zeitstempelungen TS_{F=1} generiert sowie gespeichert. Dies führt zu einer Datenmenge, welche 10 einzelne Zeitstempelungen TS_{F=1} umfasst. Für einen Skalierungsfaktor von F = 2 ergeben sich 5 einzelne Zeitstempelungen TS_{F=2}, für F=5 ergeben sich 2 einzelne Zeitstempelungen TS_{F=5} und für F=10 ergibt sich 1 einzelne Zeitstempelung TS_{F=10}.

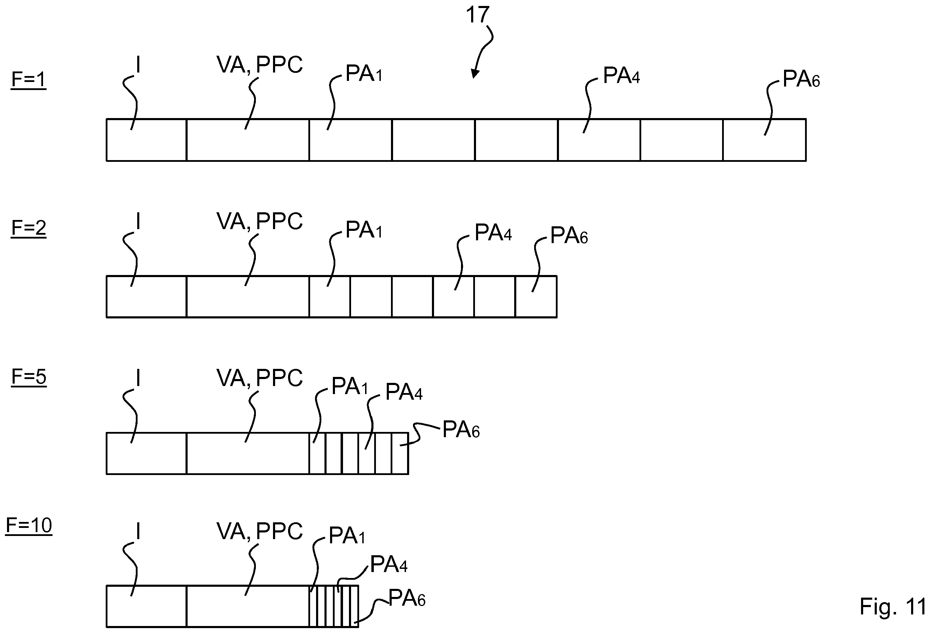

In Fig. 11 sind Beispiele für Nachrichtenstrukturen gezeigt. Jedes Datentelegramm 17 besteht aus einem Header, welcher beispielsweise wie in Fig. 3 dargestellt, die Identität I des jeweiligen Sensors 1, den absoluten kumulierten Wert VA sowie den Wert mindestens eines anderen physikalischen oder physikalisch-chemischen Parameters PPC der Umgebung des betreffenden Sensors 1 umfasst. Weiter beinhalten die Datentelegramme 17 eine Mehrzahl von Datenpaketen PA, - PAe, welche in Abhängigkeit vom jeweiligen Skalierungsfaktor F unterschiedliche Datengrößen aufweisen. Je größer der Skalierungsfaktor F gewählt wird, umso kleiner wird die Datengröße und damit die für die Übertragung benötigte Datenmenge.

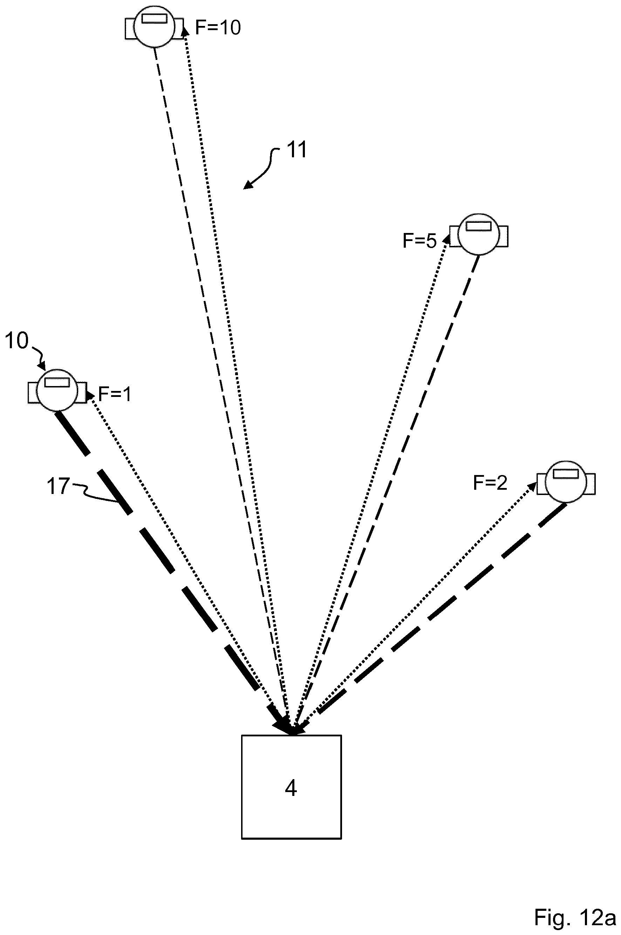

In Fig. 12a ist das Head-End 4 gezeigt, welches die Änderung der der Bedingungen für ein Generieren von Zeitstempelungen TS für jeden Verbrauchszähler 10 individuell vornimmt. Hierfür übermittelt das Head-End 4 jedem Verbrauchszähler 10 einen Skalierungsfaktor F beispielsweise über die Funkstrecke 11. Den Verbrauchszählern 10 werden so beispielsweise die Skalierungsfaktoren F=1, F=10, F=5 sowie F=2 übermittelt. Ein Skalierungsfaktor von F=1 hat somit zur Folge, dass die im Verbrauchszähler 10 eingestellte bzw. messbare elementare Messeinheit mit einem Faktor 1 multipliziert wird und damit unverändert bleibt. Durch einen höheren Skalierungsfaktor von z. B. F=2, F=5 oder F=10 wird die elementare Messeinheit entsprechend im Verbrauchszähler 10 erhöht, was dazu führt, das die Anzahl der Zeitstempelungen TS bei gleichem Durchfluss reduziert wird. Dadurch sinkt auch das Datenaufkommen beim Senden der Zeitstempelungen an das Head-End 4 über die Funkstrecke 11. Die Größe der Datentelegramme 17 ist durch die Breite der Pfeile angezeigt. Umso größer der Skalierungsfaktor F, umso geringer ist der entsprechende Datenstrom aus Datentelegrammen 17 des Verbrauchszählers 10 bei gleicher Menge des zu messenden Mediums. Das Head-End 4 kann durch die Skalierungsfaktoren F beispielsweise in einfacher Weise auf Anforderungen von Anwendungen reagieren, welche unterschiedliche Auflösungen benötigen. Diese Anwendungen können im Head-End 4 hinterlegt und ausgeführt werden.

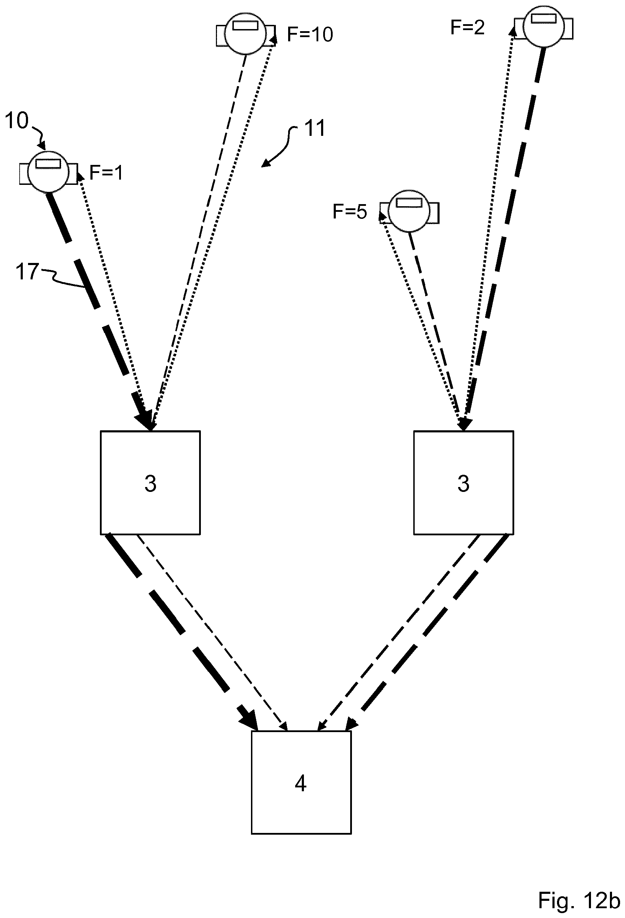

In der in Fig. 12b dargestellten Netzwerkstruktur sind zusätzliche Datensammler 3 vorhanden, welche zwischen das Head-End 4 und die einzelnen Verbrauchszähler 10 zwischengeschaltet sind. Die Datensammler 3 übermitteln die Skalierungsfaktoren F an die einzelnen Verbrauchszähler 10. Die Datensammler 3 können somit beispielsweise unmittelbar auf Störungen in der Funkverbindung reagieren und durch Anpassung der Skalierungsfaktoren F den Datenstrom aus Datentelegrammen 17 regulieren und gegebenenfalls reduzieren.

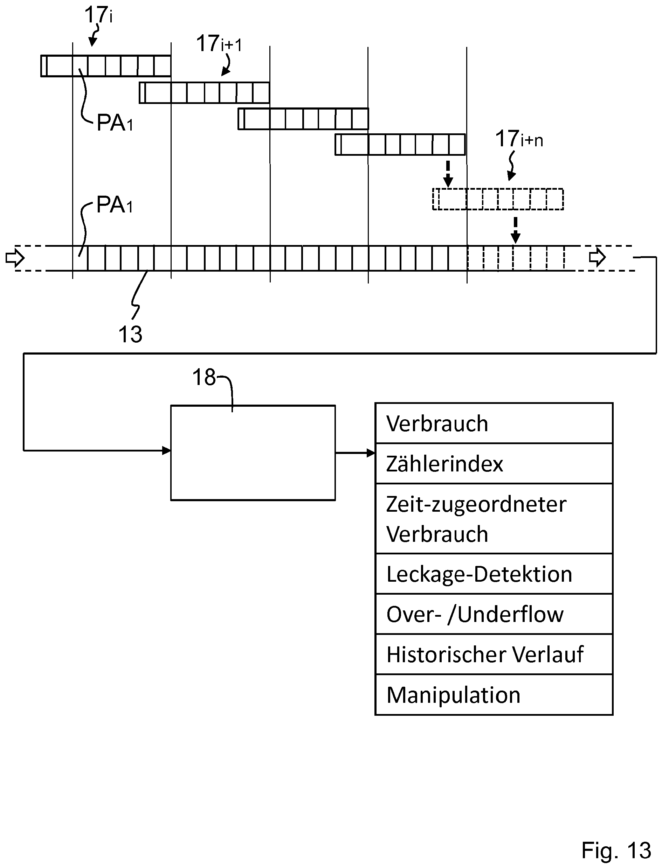

Fig. 13 zeigt die Weiterverarbeitung der einzelnen in Datentelegrammen 17ᵢ-17ᵢ₊ₙ bereitgestellten Zeitstempelungen TS zu einer fortlaufenden zusammenhängenden Zuordnung, aus der anhand des Korrelierungsmodells ein lückenloser Rohmessdatenstrom 13 rekonstruiert werden kann. Hierbei werden die einzelnen Datentelegramme 17ᵢ - 17ᵢ₊ₙ so zusammengefügt, dass die jeweiligen Daten bzw. Datenpakete PAⱼ bzw. die darin enthaltenen Zeitstempelungen TS in Zeitrelation mit denen der benachbarten Datenpakete PAⱼ gebracht werden.

Durch die erfindungsgemäße Sammlung von Zeitstempelungen TS, die von den Sensoren 1 bzw. Verbrauchszählern 10 des oder eines bestimmten Netzwerks geliefert werden, ermöglicht die Erfindung alle Arten von Auswertung, Analyse, Überprüfung, Überwachung sowie allgemein nützlicher oder gewünschter Verarbeitung und Verwertung, da die grundlegende einzelne Rohinformation zur Verfügung steht. Die Auswertung der bereitgestellten Zeitstempelungen TS erfolgt vorzugsweise im Bereich des Head-Ends 4 über Auswertemittel 18 und ergibt eine Vielzahl wichtiger Informationen, die für die Verwaltung des Versorgungsnetzes notwendig sind, bisher aber noch nicht generiert werden konnten, wie z.B. Verbrauch, Zählerindex, zeitzugeordneter Verbrauch, Leckage-Detektion, Over-/Underflow, historischer Verlauf und/oder Manipulation. Informationen können somit jederzeit auch retrospektive zeitlückenlos abgerufen und einer bisherigen Auswertung zugeführt werden.

Die aus den Zeitstempelungen TS rekonstruierten Rohmessdaten liegen im Head-End 4 erfindungsgemäß als Rohmessdatenstrom 13 in sehr hoher Auflösung bzw. Granularität ohne zeitliche Lücken vor. Demzufolge liegen im Gegensatz zu bisherigen Verfahren aufgrund des erfindungsgemäßen Verfahrens im Head-End 4 sehr viel mehr verwertbare Daten vor als bisher.

Der im Head-End 4 vorliegende Rohmessdatenstrom 13 besitzt vorzugsweise eine Auflösung im Sekundenbereich, Zehntelsekundenbereich, Hundertstelsekundenbereich oder Tausendstelsekundenbereich.

Gegenstand der Erfindung ist auch, wie in Fig. 1 schematisch dargestellt, ein Versorgungsnetz zur Verteilung eines insbesondere fluiden Verbrauchsguts unter Einsatz entsprechend hergerichteter Verbrauchszähler 10, die in dem Versorgungsnetz betrieben werden. Der jeweilige Verbrauchszähler 10 umfasst, vgl. Fig. 2, mindestens einen Sensor 1, welcher über ein Messelement 9 Rohmessdaten erfassen kann. Des Weiteren umfasst der jeweilige Verbrauchszähler 10 eine Messdatenaufbereitung 14, die einen Mikroprozessor 8, Speichermittel 7 sowie eine Zeitreferenzeinrichtung 15 beinhaltet. In der Messdatenaufbereitung 14 erfolgt eine Zeitstempelung TS aufgrund der Rohmessdaten, eine Komprimierung der Zeitstempelungen TS sowie eine Aufbereitung in ein Format, das zur Übertragung über eine Funkstrecke 11 bzw. über die primäre Kommunikationsstrecke 5 gemäß einem bestimmten Protokoll geeignet ist.

Der Verbrauchszähler 10 kann eine (nicht dargestellte) eigene Stromversorgung in Form einer Batterie oder dergleichen bei Bedarf umfassen. Somit kann der Verbrauchszähler 10 energieautark betrieben werden.

Im Bereich des Head-Ends 4 sind Auswertemittel 18 vorgesehen, die in der Lage sind, die Zeitstempelungen TS in den einzelnen Datentelegrammen 17ᵢ - 17ᵢ₊ₙ bzw. deren Datenpakete PAⱼ zeitkontinuierlich und ohne Lücken zu einem fortlaufenden lückenlosen Rohmessdatenstrom 13 zusammenzuführen und hieraus entsprechende Dekomprimierungen, Auswertungen, Berechnungen und dergleichen vorzunehmen. Die entsprechenden Daten umfassen vorzugsweise alle in dem Versorgungsnetz befindlichen Verbrauchszähler 10.

Darüber hinaus umfasst das vorgenannte System für das betreffende oder jedes geografische Gebiet, in dem die Verbrauchszähler 10 installiert sind, einen festen Datensammler 3 (Konzentrator), der mit den Verbrauchszählern 10 des Gebietes, das ihm zugewiesen ist, eine primäre Kommunikationsstrecke 5 des Versorgungsnetzes bildet. Die primäre Kommunikationsstrecke 5 kann beispielsweise als Funkstrecke 11 ausgebildet sein. Der Datensammler 3 ist wiederum über eine tertiäre Kommunikationsstrecke 6 mit dem Head-End 4 verbunden. Die Daten können entlang der tertiären Kommunikationsstrecke 6 auf unterschiedliche Art und Weise übertragen werden, beispielsweise via LAN, GPRS, LTE, 3G, 4G usw.

Vorzugsweise bilden die Speichermittel 7 eines jeden Sensors 1 bzw. Verbrauchszählers 10 einen Pufferspeicher und sind geeignet und dazu hergerichtet, den Inhalt mehrerer PAⱼ-Pakete von Zeitstempelungen TS insbesondere im komprimierten Zustand zu speichern, wobei der Inhalt oder ein Teil des Inhalts dieses Pufferspeichers bei jeder Übertragung bzw. Abrufs durch den Datensammler 3 übertragen wird.

Die von jedem Datensammler 3 gesammelten Informationen werden direkt oder indirekt an das Head-End 4 übermittelt. Dort werden auch die "Business"-Funktionen definiert und ausgeführt.

Mit dem erfindungsgemäßen Verfahren können somit beliebige Rohmessdaten abgetastet und als Auslöser für Zeitstempelungen TS verwendet werden. Bei den Zeitstempelungen TS kann es sich insbesondere um Zeitpunkte oder Zeitdifferenzen handeln. Vorzugsweise ist ein Startzeitpunkt definiert.

Vorzugsweise werden die Zeitstempelungen TS in den Speichermitteln 7 des Verbrauchszählers 10 erst dann gelöscht, wenn die Übertragung der Zeitstempelungen TS über die primäre Kommunikationsstrecke 5 vom Empfänger bzw. Datensammler 3 bestätigt worden ist.

Der Fachmann versteht selbstverständlich, dass die Erfindung auf die Messung und Fernauslesung verschiedenster Parameter und Größen angewendet werden kann: Es genügt, eine elementare (vom Sensor 1 messbare) Veränderung eines Parameters oder einer Größe in Übereinstimmung mit der Auflösung des betrachteten Sensors 1 genau datieren zu können (die zeitgestempelte elementare Variation kann der Auflösung des Sensors oder möglicherweise einem Vielfachen dieser Auflösung entsprechen).

Selbstverständlich ist die Erfindung nicht auf die in den beigefügten Zeichnungen beschriebenen und dargestellten Ausführungsformen beschränkt. Änderungen bleiben möglich, insbesondere hinsichtlich der Beschaffung der verschiedenen Elemente oder durch technische Entsprechungen, ohne dass dadurch der Schutzbereich der Erfindung verlassen wird, der durch die folgenden Ansprüche definiert wird.

### BEZUGSZEICHENLISTE

- 1: Sensor
- 2: Funk-Kommunikationsmittel
- 3: Datensammler
- 4: Head-End
- 5: primäre Kommunikationsstrecke
- 6: tertiäre Kommunikationsstrecke
- 7: Speichermittel
- 8: Mikroprozessor
- 9: Messelement
- 10: Verbrauchszähler
- 11: Funkstrecke
- 13: Rohmessdatenstrom
- 14: Messdatenaufbereitung
- 15: Zeitreferenzeinrichtung
- 16: Versorgungsleitung
- 17: Datentelegramm
- 18: Auswertemittel
- 19: Impulsgeberelement
- 20: Flügelrad
- 22: Ultraschallwandlerelement
- 23: Ultraschallwandlerelement
- 24: Ultraschallmessstrecke

- PAⱼ: Datenpaket
- TS: Zeitstempelung
- F: Skalierungsfaktor

## Patentansprüche

1. Verfahren zum Sammeln von Daten in Zusammenhang mit einem Verbrauch, einem physikalischen oder physikalisch-chemischen Parameter und/oder einem Betriebszustand im Rahmen eines Betriebs eines lokalen Sensors (1), vorzugsweise eines Sensors (1) für einen Verbrauchszähler (10), als Bestandteil eines mindestens einen lokalen Sensor (1) vorzugsweise eine Mehrzahl von lokalen Sensoren (1) umfassendes Versorgungsnetzes zur Verteilung eines Verbrauchsguts, wobei
der Sensor (1) ein Messelement (9) enthält,
das Messelement (9) des jeweiligen Sensors (1) elementare Messeinheiten, die mindestens einer physikalischen oder physikalisch-chemischen Größe oder mindestens eines physikalischen oder physikalisch-chemischen Parameters entsprechen, als Rohmessdaten liefert, und
der Sensor (1) Funk-Kommunikationsmittel (2) sowie Speichermittel (7) umfasst, wobei
zur Festlegung der Messauflösung des Sensors (1) die Bedingungen für ein Generieren von Zeitstempelungen (TS) unter Anwendung eines Korrelierungsmodells vorher festgelegt werden,
auf der Basis des Korrelierungsmodells Zeitstempelungen (TS) von aufeinanderfolgenden Rohmessdaten in dem Sensor (1) generiert werden,
die Zeitstempelungen (TS) über eine drahtgebundene Verbindung und/ oder über eine Funkstrecke (11) übertragen werden, so dass auf Basis der Zeitstempelungen (TS) unter Anwendung des Korrelierungsmodells die vom Messelement (9) erfassten Rohmessdaten rekonstruiert und ausgewertet werden, und wobei
der Sensor (1) über eine primäre Kommunikationsstrecke (5) mit einem Datensammler (3) in Verbindung steht,
zwischen dem Datensammler (3) und einem Head-End (4) eine tertiäre Kommunikationsstrecke (6) vorgesehen ist, und
die von dem Sensor (1) übertragenen Zeitstempelungen (TS) im Datensammler (3) und/oder im Head-End (4) gesammelt, gespeichert und/oder ausgewertet werden,
**dadurch gekennzeichnet, dass**
die Bedingungen für ein Generieren von Zeitstempelungen (TS) im Rahmen des Korrelierungsmodells zeitlich dynamisch änderbar sind, wobei die Änderung der Bedingungen für ein Generieren von Zeitstempelungen (TS) durch den Datensammler (3) und/oder das Head-End (4) vorgenommen wird, indem der Datensammler (3) und/oder das Head-End (4) die Bedingungen für ein Generieren von Zeitstempelungen (TS) festlegen bzw. dynamisch ändern und diese an den Sensor (1) übertragen,
eine Mehrzahl von Zeitstempelungen (TS) entlang der primären Kommunikationsstrecke (5) jeweils als Datenpaket (17ᵢ, 17ᵢ₊ₙ) übertragen wird, wobei ein Datenpaket jeweils mehrere Zeitstempelungen (TS1-TSn) enthält, und
die Festlegung, wann eine Datenübertragung vom Sensor (1) durchzuführen ist, davon abhängt, ob eine vorgegebene Menge an insbesondere komprimierten gesammelten Zeitstempelungen (TS) seit der vorherigen Datenübertragung erreicht ist.

2. Verfahren nach Anspruch 1, **dadurch gekennzeichnet, dass** im Rahmen des Korrelierungsmodells ein bestimmter Wert, eine bestimmte Wertänderung oder eine bestimmte Wertdifferenz der mindestens einen physikalischen oder physikalisch-chemischen Größe oder des mindestens einen physikalischen oder physikalisch-chemischen Parameters für die Zuordnung einer Zeitstempelung (TS) festgelegt wird,
bei einem Erfassen des bestimmten Werts, der bestimmten Wertänderung oder der bestimmten Wertdifferenz durch das Messelement (9) eine Zeitstempelung (TS) ausgelöst und in den Speichermitteln (7) des Sensors (1) abgespeichert wird.

3. Verfahren nach einem der vorhergehenden Ansprüche, **dadurch gekennzeichnet, dass** im Rahmen des Korrelierungsmodells ein schrittweise oder inkrementell sich erhöhender Zählerstand und/oder eine Wertetabelle mittels Zeitstempelungen (TS) abgebildet wird.

4. Verfahren nach einem der vorhergehenden Ansprüche, **dadurch gekennzeichnet, dass** die Zeitstempelungen (TS) mit einem Vorzeichen versehen sind.

5. Verfahren nach einem der vorhergehenden Ansprüche, **dadurch gekennzeichnet, dass** auf Basis der beim Datensammler (3) und/oder beim Head-End (4) ankommenden Zeitstempelungen (TS) unter Anwendung des Korrelierungsmodells ein Rohmessdatenstrom (13) generiert wird.

6. Verfahren nach einem der vorhergehenden Ansprüche, **dadurch gekennzeichnet, dass** zur Festlegung der Bedingungen für ein Generieren von Zeitstempelungen (TS) ein Skalierungsfaktor (F) vorgesehen ist, wobei insbesondere vorgesehen ist, **dass** der Skalierungsfaktor (F) vom Datensammler (3) und/oder vom Head-End (4) an den Sensor (1) übermittelt wird.

7. Verfahren nach einem der vorhergehenden Ansprüche, **dadurch gekennzeichnet, dass** die Festlegung der Bedingungen für ein Generieren von Zeitstempelungen (TS) auf Basis einer Leistungsanalyse der Funkverbindung (11) und/oder auf Basis von insbesondere zeitlich veränderlichen Anforderungen einer Anwendung, welche insbesondere die rekonstruierten Rohmessdaten verwendet, vorgenommen wird.

8. Verfahren nach einem der vorhergehenden Ansprüche, **dadurch gekennzeichnet, dass** die dynamische Festlegung der Bedingungen für ein Generieren von Zeitstempelungen (TS) für den einzelnen Sensor (1) individuell vorgenommen wird, insbesondere bei einer Mehrzahl von Sensoren (1).

9. Verfahren nach mindestens einem der vorhergehenden Ansprüche, **dadurch gekennzeichnet, dass** der Rohmessdatenstrom (13) in der Weiterfolge der Datenverarbeitung abgesehen von der Messauflösung des Sensors (1) auf einer zeithistorischen Basis zeitlückenlos auswertbar ist.

10. Verfahren nach einem der vorhergehenden Ansprüche, **dadurch gekennzeichnet, dass** es sich bei den elementaren Messeinheiten um die elektrische Spannung oder um die Stromstärke handelt.

11. Verfahren nach einem der vorhergehenden Ansprüche, **dadurch gekennzeichnet, dass** die gemessene physikalische Größe sich auf ein Versorgungsmedium, vorzugsweise Wasser, Strom, Treibstoff oder Gas, eines Versorgungsnetzes bezieht und/oder der oder einer der gemessene(n) physikalische(n) oder chemisch-physikalische(n) Parameter kennzeichnend ist für die Menge, die Qualität und/oder Zusammensetzung eines Fluids, das durch den betreffenden Sensor (1) strömt oder von diesem kontaktiert wird.

12. Verfahren nach einem der vorhergehenden Ansprüche, **dadurch gekennzeichnet, dass** die elementare Messeinheit (9) eine Zeitstempelung (TS) generiert, sobald die elementare Messeinheit (9) einen Impuls empfängt.

13. Verfahren nach einem der vorhergehenden Ansprüche, **dadurch gekennzeichnet, dass** der Rohmessdatenstrom (13) eine zeitliche Auflösung besitzt, die durch die Sensor-Abtastrate bzw. Messelement-Abtastrate oder ein Vielfaches derselben festgelegt oder bedingt ist.

14. Verfahren nach einem der vorhergehenden Ansprüche, **dadurch gekennzeichnet, dass** der Rohmessdatenstrom (13) unter Zugrundelegung einer stetigen zeitlichen Auflösung kontinuierlich und/oder vollständig ist.

15. Verfahren nach einem der vorhergehenden Ansprüche, **dadurch gekennzeichnet, dass** die Festlegung, wann eine neue Datenübertragung vom Sensor durchzuführen ist, vom
Ablauf eines vorgegebenen Zeitintervalls abhängt.

16. Verfahren nach einem der vorhergehenden Ansprüche, **dadurch gekennzeichnet, dass** es umfasst, die Zeitstempelungen (TS) durch Formatierung in Datenpaketen (PAⱼ) vorbestimmter fester Größe zu verpacken, wobei jedes Mal, wenn die akkumulierten Daten die Größe eines Datenpakets (PAⱼ) erreichen oder das vorgegebene Zeitintervall abgelaufen ist, eine neue Übertragung ausgelöst wird.

17. Verfahren nach einem der vorhergehenden Ansprüche, **dadurch gekennzeichnet, dass** die Datenübertragung mit einer Redundanz durchgeführt wird, wobei die Redundanz in der Übertragung insbesondere durch wiederholtes Senden derselben Zeitstempelungen (TS) und/oder wiederholtes Senden desselben Datenpakets (PAⱼ) in mehreren aufeinanderfolgenden Übertragungsvorgängen erreicht wird.

18. Verfahren nach einem der vorhergehenden Ansprüche, **dadurch gekennzeichnet, dass** die Zeitstempelungen (TS) in komprimierter Form übertragen werden, wobei insbesondere vorgesehen ist, **dass** die Zeitstempelungen (TS) komprimiert werden und die Komprimierung der Zeitstempelungen (TS) verlustfrei durchgeführt wird oder die Komprimierung der Zeitstempelungen (TS) mit einem vorgegebenen zulässigen Verlustniveau durchgeführt wird.

19. Sensor (1) zum Sammeln von Daten in Zusammenhang mit einem Verbrauch, einem physikalischen oder physikalisch-chemischen Parameter und/oder einem Betriebszustand im Rahmen eines Betriebs eines lokalen Sensors, vorzugsweise für einen Verbrauchszähler (10), als Bestandteil eines mindestens einen lokalen Sensor (1) vorzugsweise eine Mehrzahl von lokalen Sensoren (1) umfassendes Versorgungsnetzes zur Verteilung eines Verbrauchsguts, wobei
der Sensor (1) ein Messelement (9) enthält,
das Messelement (9) des jeweiligen Sensors (1) dazu eingerichtet ist, elementare Messeinheiten, die mindestens einer physikalischen oder physikalisch-chemischen Größe oder mindestens eines physikalischen oder physikalisch-chemischen Parameters entsprechen, als Rohmessdaten zu liefern,
der Sensor (1) Kommunikationsmittel (2) sowie Speichermittel (7) umfasst, wobei der Sensor (1) dazu eingerichtet ist,
zur Festlegung der Messauflösung des Sensors (1) die Bedingungen für ein Generieren von Zeitstempelungen (TS) unter Anwendung eines Korrelierungsmodells vorher festzulegen,
auf der Basis des Korrelierungsmodells Zeitstempelungen (TS) von aufeinanderfolgenden Rohmessdaten in dem Sensor (1) zu generieren,
die Zeitstempelungen (TS) über eine drahtgebundene Verbindung und/ oder über eine Funkstrecke zu übertragen, wobei
der Sensor (1) über eine primäre Kommunikationsstrecke (5) mit einem über eine tertiäre Kommunikationsstrecke (6) verbindbaren Datensammler (3) verbindbar ist, **dadurch gekennzeichnet, dass**
der Sensor (1) dazu eingerichtet ist,
durch den Datensammler (3) und/oder das Head-End (4) festgestellte dynamisch änderbare Bedingungen für ein Generieren von Zeitstempelungen (TS) im Rahmen des Korrelierungsmodells zu empfangen,
eine Mehrzahl von Zeitstempelungen (TS) entlang der primären Kommunikationsstrecke (5) jeweils als Datenpaket (17ᵢ, 17ᵢ₊ₙ) zu übertragen, wobei ein Datenpaket jeweils mehrere Zeitstempelungen(TS1-TSn) enthält und
die Festlegung, wann eine Datenübertragung durchzuführen ist, davon abhängig zu machen, ob eine vorgegebenen Menge an insbesondere komprimierten gesammelten Zeitstempelungen (TS) seit der vorherigen Datenübertragung erreicht ist.

20. Versorgungsnetz zur Verteilung eines Verbrauchsmediums mit
mindestens einem lokalen Sensor (1) vorzugsweise einer Mehrzahl von lokalen Sensoren (1) zum Generieren und/oder Weiterleiten von Zeitstempelungen (TS) von Rohmessdaten auf der Basis eines Korrelierungsmodells, vorzugsweise Rohmessdaten in Zusammenhang mit einem Verbrauch an Verbrauchsmedium, einem physikalischen oder physikalisch-chemischen Parameter und/oder einem Betriebszustand eines Verbrauchszählers (10),
einem Datensammler (3),
einer primären Kommunikationsstrecke (5) zwischen dem jeweiligen Sensor (1) und dem Datensammler (3),
einem Head-End (4) zur Auswertung der Daten, sowie
einer tertiären Kommunikationsstrecke (6) zwischen Datensammler (3) und Head-End (4), **dadurch gekennzeichnet, dass** als Sensor ein Sensor (1) nach Anspruch 19 vorgesehen ist.

## Claims

1. Method for collecting data in connection with a consumption, a physical or physico-chemical parameter and/or an operating state during operation of a local sensor (1), preferably a sensor (1) for a consumption meter (10), as part of a supply network which comprises at least one local sensor (1), preferably a plurality of local sensors (1), and is intended to distribute a consumable, wherein
the sensor (1) contains a measuring element (9),
the measuring element (9) of the respective sensor (1) provides elementary measuring units, which correspond to at least one physical or physico-chemical variable or at least one physical or physico-chemical parameter, as raw measurement data, and
the sensor (1) comprises radio communication means (2) and storage means (7), wherein
in order to determine the measurement resolution of the sensor (1), the conditions for generating time stamps (TS) are stipulated in advance using a correlation model,
time stamps (TS) of successive raw measurement data are generated in the sensor (1) on the basis of the correlation model,
the time stamps (TS) are transmitted via a wired connection and/or via a radio path (11), with the result that the raw measurement data acquired by the measuring element (9) are reconstructed and evaluated on the basis of the time stamps (TS) using the correlation model, and wherein
the sensor (1) is connected to a data collector (3) via a primary communication path (5),
a tertiary communication path (6) is provided between the data collector (3) and a head end (4), and
the time stamps (TS) transmitted by the sensor (1) are collected, stored and/or evaluated in the data collector (3) and/or in the head end (4),
**characterized in that**
the conditions for generating time stamps (TS) can be changed dynamically in terms of time within the framework of the correlation model, wherein the data collector (3) and/or the head end (4) change (s) the conditions for generating time stamps (TS) by virtue of the data collector (3) and/or the head end (4) determining or dynamically changing the conditions for generating time stamps (TS) and transmitting said conditions to the sensor (1),
a plurality of time stamps (TS) are each transmitted as a data packet (17ᵢ, 17ᵢ₊ₙ) along the primary communication path (5), wherein a data packet respectively contains a plurality of time stamps (TS1-TSn), and
the determination of when a data transmission should be carried out by the sensor (1) depends on whether a predefined quantity of in particular compressed collected time stamps (TS) has been reached since the previous data transmission.

2. Method according to Claim 1, **characterized in that** a particular value, a particular value change or a particular value difference of the at least one physical or physico-chemical variable or the at least one physical or physico-chemical parameter is determined within the scope of the correlation model for the assignment of a time stamp (TS),
if the particular value, the particular value change or the particular value difference is captured by the measuring element (9), a time stamp (TS) is triggered and is stored in the storage means (7) of the sensor (1).

3. Method according to one of the preceding claims, **characterized in that** a gradually or incrementally increasing meter reading and/or a value table is/are represented by means of time stamps (TS) within the scope of the correlation model.

4. Method according to one of the preceding claims, **characterized in that** the time stamps (TS) are provided with a sign.

5. Method according to one of the preceding claims, **characterized in that** a raw measurement data stream (13) is generated on the basis of the time stamps (TS) arriving at the data collector (3) and/or at the head end (4) using the correlation model.

6. Method according to one of the preceding claims, **characterized in that** a scaling factor (F) is provided for the purpose of stipulating the conditions for generating time stamps (TS), wherein provision is made, in particular, for the scaling factor (F) to be transmitted from the data collector (3) and/or from the head end (4) to the sensor (1).

7. Method according to one of the preceding claims, **characterized in that** the conditions for generating time stamps (TS) are stipulated on the basis of a power analysis of the radio connection (11) and/or on the basis of in particular temporally variable requirements of an application which uses the reconstructed raw measurement data, in particular.

8. Method according to one of the preceding claims, **characterized in that** the conditions for generating time stamps (TS) are dynamically stipulated individually for the individual sensor (1), in particular in the case of a plurality of sensors (1).

9. Method according to at least one of the preceding claims, **characterized in that** the raw measurement data stream (13) can be evaluated, in the further course of the data processing, on a time-historical basis without a time gap irrespective of the measurement resolution of the sensor (1).

10. Method according to one of the preceding claims, **characterized in that** the elementary measuring units are the electrical voltage or the current intensity.

11. Method according to one of the preceding claims, **characterized in that** the measured physical variable relates to a supply medium, preferably water, electricity, fuel or gas, of a supply network, and/or the or one of the measured physical or chemico-physical parameter(s) is characteristic of the quantity, quality and/or composition of a fluid which flows through the relevant sensor (1) or with which contact is made by the latter.

12. Method according to one of the preceding claims, **characterized in that** the elementary measuring unit (9) generates a time stamp (TS) as soon as the elementary measuring unit (9) receives a pulse.

13. Method according to one of the preceding claims, **characterized in that** the raw measurement data stream (13) has a temporal resolution which is determined or conditioned by the sensor sampling rate or measuring element sampling rate or a multiple thereof.

14. Method according to one of the preceding claims, **characterized in that** the raw measurement data stream (13) is continuous and/or complete taking a continuous temporal resolution as a basis.

15. Method according to one of the preceding claims, **characterized in that** the determination of when a new data transmission should be carried out by the sensor depends on the
expiry of a predefined interval of time.

16. Method according to one of the preceding claims, **characterized in that** it comprises packaging the time stamps (TS) by formatting them in data packets (PAⱼ) of a predetermined fixed size, wherein, each time the accumulated data reach the size of a data packet (PAⱼ) or the predefined interval of time has expired, a new transmission is initiated.

17. Method according to one of the preceding claims, **characterized in that** the data transmission is carried out with redundancy, wherein the redundancy in the transmission is achieved, in particular, by repeatedly transmitting the same time stamps (TS) and/or repeatedly transmitting the same data packet (PAⱼ) in a plurality of successive transmission operations.

18. Method according to one of the preceding claims, **characterized in that** the time stamps (TS) are transmitted in compressed form, wherein provision is made, in particular, for the time stamps (TS) to be compressed and for the compression of the time stamps (TS) to be carried out in a loss-free manner or for the compression of the time stamps (TS) to be carried out with a predefined permissible loss level.

19. Sensor (1) for collecting data in connection with a consumption, a physical or physico-chemical parameter and/or an operating state during operation of a local sensor, preferably for a consumption meter (10), as part of a supply network which comprises at least one local sensor (1), preferably a plurality of local sensors (1), and is intended to distribute a consumable, wherein
the sensor (1) contains a measuring element (9),
the measuring element (9) of the respective sensor (1) is configured to provide elementary measuring units, which correspond to at least one physical or physico-chemical variable or at least one physical or physico-chemical parameter, as raw measurement data,
the sensor (1) comprises communication means (2) and storage means (7), wherein the sensor is configured
in order to determine the measurement resolution of the sensor (1), to stipulate the conditions for generating time stamps (TS) in advance using a correlation model,
to generate time stamps (TS) of successive raw measurement data in the sensor (1) on the basis of the correlation model,
to transmit the time stamps (TS) via a wired connection and/or via a radio path, wherein
the sensor (1) can be connected to a data collector (3), which can be connected via a tertiary communication path (6), via a primary communication path (5), **characterized in that**
the sensor (1) is configured
to receive dynamically changeable conditions for generating time stamps (TS), which conditions are determined by the data collector (3) and/or the head end (4), within the scope of the correlation model,
to respectively transmit a plurality of time stamps (TS) as a data packet (17ᵢ, 17ᵢ₊ₙ) along the primary communication path (5), wherein a data packet respectively contains a plurality of time stamps (TS1-TSn), and
to make the determination of when a data transmission should be carried out dependent on whether a predefined quantity of in particular compressed collected time stamps (TS) has been reached since the previous data transmission.

20. Supply network for distributing a consumption medium, having
at least one local sensor (1), preferably a plurality of local sensors (1), for generating and/or forwarding time stamps (TS) of raw measurement data on the basis of a correlation model, preferably raw measurement data in connection with a consumption of consumption medium, a physical or physico-chemical parameter and/or an operating state of a consumption meter (10),
a data collector (3),
a primary communication path (5) between the respective sensor (1) and the data collector (3),
a head end (4) for evaluating the data, and
a tertiary communication path (6) between the data collector (3) and the head end (4), **characterized in that** a sensor (1) according to Claim 19 is provided as sensor.

## Revendications

1. Procédé de collecte de données en relation avec une consommation, un paramètre physique ou physico-chimique et/ou un état de fonctionnement dans le cadre d'un fonctionnement d'un capteur local (1), de préférence d'un capteur (1) pour un compteur de consommation (10), en faisant partie d'un réseau d'alimentation comprenant au moins un capteur local (1), de préférence une pluralité de capteurs locaux (1), et destiné à distribuer un produit de consommation, dans lequel
le capteur (1) comporte un élément de mesure (9),
l'élément de mesure (9) du capteur (1) respectif fournit en tant que données de mesure brutes des unités de mesure élémentaires qui correspondent à au moins une grandeur physique ou physico-chimique ou à au moins un paramètre physique ou physico-chimique, et
le capteur (1) comprend des moyens de communication radio (2) ainsi que des moyens de stockage (7), dans lequel
pour définir la résolution de mesure du capteur (1), les conditions d'une génération d'horodatages (TS) en appliquant un modèle de corrélation sont prédéfinies,
des horodatages (TS) de données de mesure brutes consécutives sont générés dans le capteur (1) sur la base du modèle de corrélation,
les horodatages (TS) sont transmis par une liaison filaire et/ou par un trajet radio (11) de sorte que sur la base des horodatages (TS) en appliquant le modèle de corrélation, les données de mesure brutes détectées par l'élément de mesure (9) sont restituées et évaluées, et dans lequel
le capteur (1) est en communication avec un collecteur de données (3) par un trajet de communication primaire (5),
un trajet de communication tertiaire (6) est prévu entre le collecteur de données (3) et une tête de réseau (4), et
les horodatages (TS) transmis par le capteur (1) sont collectés, stockés et/ou évalués dans le collecteur de données (3) et/ou dans la tête de réseau (4),
**caractérisé en ce que**
les conditions d'une génération d'horodatages (TS) sont variables de manière dynamique dans le temps dans le cadre du modèle de corrélation, la modification des conditions d'une génération d'horodatages (TS) étant effectuée par le collecteur de données (3) et/ou la tête de réseau (4) **en ce que** le collecteur de données (3) et/ou la tête de réseau (4) définissent ou modifient dynamiquement les conditions d'une génération d'horodatages (TS) et les transmettent au capteur (1),
une pluralité d'horodatages (TS) est transmise sur le trajet de communication primaire (5) respectivement sous forme de paquet de données (17ᵢ, 17ᵢ₊ₙ) , un paquet de données comportant respectivement plusieurs horodatages (TS1-TSn), et
la définition à quel moment une transmission de données est à effectuer par le capteur (1) dépend du fait si une quantité prédéfinie d'horodatages (TS) collectés, en particulier comprimés, depuis la transmission de données précédente est atteinte.

2. Procédé selon la revendication 1, **caractérisé en ce que** dans le cadre du modèle de corrélation, une valeur déterminée, un changement de valeur déterminé ou une différence de valeur déterminée de ladite au moins une grandeur physique ou physico-chimique ou du au moins un paramètre physique ou physico-chimique est défini(e) pour l'attribution d'un horodatage (TS),
lors d'une détection de la valeur déterminée, du changement de valeur déterminé ou de la différence de valeur déterminée par l'élément de mesure (9), un horodatage (TS) est déclenché et stocké dans les moyens de stockage (7) du capteur (1).

3. Procédé selon l'une quelconque des revendications précédentes, **caractérisé en ce que** dans le cadre du modèle de corrélation une position de compteur augmentant progressivement ou de manière incrémentielle et/ou une table de valeurs sont représentées au moyen d'horodatages (TS).

4. Procédé selon l'une quelconque des revendications précédentes, **caractérisé en ce que** les horodatages (TS) sont signés.

5. Procédé selon l'une quelconque des revendications précédentes, **caractérisé en ce qu'**un flux de données de mesure brutes (13) est généré sur la base des horodatages (TS) arrivant au niveau du collecteur de données (3) et/ou de la tête de réseau (4) en appliquant le modèle de corrélation.

6. Procédé selon l'une quelconque des revendications précédentes, **caractérisé en ce qu'**un facteur de mise à l'échelle (F) est prévu pour définir les conditions d'une génération d'horodatages (TS), dans lequel il est prévu en particulier que le facteur de mise à l'échelle (F) soit transmis du collecteur de données (3) et/ou de la tête de réseau (4) au capteur (1).

7. Procédé selon l'une quelconque des revendications précédentes, **caractérisé en ce que** la définition des conditions d'une génération d'horodatages (TS) est effectuée sur la base d'une analyse de performance de la liaison radio (11) et/ou sur la base de demandes, en particulier variables dans le temps, d'une application qui utilise en particulier les données de mesure brutes restituées.

8. Procédé selon l'une quelconque des revendications précédentes, **caractérisé en ce que** la définition dynamique des conditions d'une génération d'horodatages (TS) est effectuée individuellement pour le capteur individuel (1), en particulier pour une pluralité de capteurs (1).

9. Procédé selon au moins l'une quelconque des revendications précédentes, **caractérisé en ce que** le flux de données de mesure brutes (13) peut être évalué sans discontinuité temporelle dans la suite du traitement de données, mise à part la résolution de mesure du capteur (1), sur une base d'historique de temps.

10. Procédé selon l'une quelconque des revendications précédentes, **caractérisé en ce que** les unités de mesure élémentaires correspondent à la tension électrique ou à l'intensité de courant.

11. Procédé selon l'une quelconque des revendications précédentes, **caractérisé en ce que** la grandeur physique mesurée fait référence à un milieu d'alimentation, de préférence à l'eau, au courant, à un combustible ou à un gaz, d'un réseau d'alimentation, et/ou ledit ou l'un des paramètres physiques ou chimio-physiques mesurés est caractéristique de la quantité, de la qualité et/ou de la composition d'un fluide qui traverse le capteur (1) en question ou entre en contact avec celui-ci.

12. Procédé selon l'une quelconque des revendications précédentes, **caractérisé en ce que** l'unité de mesure élémentaire (9) génère un horodatage (TS) dès que l'unité de mesure élémentaire (9) reçoit une impulsion.

13. Procédé selon l'une quelconque des revendications précédentes, **caractérisé en ce que** le flux de données de mesure brutes (13) dispose d'une résolution temporelle qui est définie ou conditionnée par la fréquence d'échantillonnage de capteur ou la fréquence d'échantillonnage d'élément de mesure ou un multiple de celles-ci.

14. Procédé selon l'une quelconque des revendications précédentes, **caractérisé en ce que** le flux de données de mesure brutes (13) est continu et/ou complet sur la base d'une résolution temporelle constante.

15. Procédé selon l'une quelconque des revendications précédentes, **caractérisé en ce que** la définition à quel moment une nouvelle transmission de données est à effectuer par le capteur dépend de l'expiration d'un intervalle de temps prédéfini.

16. Procédé selon l'une quelconque des revendications précédentes, **caractérisé en ce qu'**il comprend le conditionnement des horodatages (TS) par formatage en paquets de données (PAⱼ) de taille fixe prédéterminée, dans lequel une nouvelle transmission est déclenchée chaque fois que les données accumulées atteignent la taille d'un paquet de données (PAⱼ) ou l'intervalle de temps prédéfini a expiré.

17. Procédé selon l'une quelconque des revendications précédentes, **caractérisé en ce que** la transmission de données est effectuée de manière redondante, dans lequel la redondance de la transmission est obtenue en particulier par un envoi répété des mêmes horodatages (TS) et/ou un envoi répété du même paquet de données (PAⱼ) dans plusieurs opérations de transmission consécutives.

18. Procédé selon l'une quelconque des revendications précédentes, **caractérisé en ce que** les horodatages (TS) sont transmis sous forme comprimé, dans lequel il est prévu en particulier que les horodatages (TS) soient comprimés, et la compression des horodatages (TS) soit effectuée sans perte, ou que la compression des horodatages (TS) soit effectuée avec un niveau de perte admissible prédéfini.

19. Capteur (1) de collecte de données en relation avec une consommation, un paramètre physique ou physico-chimique et/ou un état de fonctionnement dans le cadre d'un fonctionnement d'un capteur local, de préférence pour un compteur de consommation (10), en faisant partie d'un réseau d'alimentation comprenant au moins un capteur local (1), de préférence une pluralité de capteurs locaux (1), et destiné à distribuer un produit de consommation, dans lequel,
le capteur (1) comporte un élément de mesure (9),
l'élément de mesure (9) du capteur (1) respectif est conçu pour fournir en tant que données de mesure brutes des unités de mesure élémentaires qui correspondent à au moins une grandeur physique ou physico-chimique ou à au moins un paramètre physique ou physico-chimique,
le capteur (1) comprend des moyens de communication radio (2) ainsi que des moyens de stockage (7), le capteur (1) étant conçu pour
afin de définir la résolution de mesure du capteur (1), prédéfinir les conditions d'une génération d'horodatages (TS) en appliquant un modèle de corrélation,
sur la base du modèle de corrélation, générer dans le capteur (1) des horodatages (TS) de données de mesure brutes consécutives,
transmettre les horodatages (TS) par une liaison filaire et/ou par un trajet radio, dans lequel
le capteur (1) peut être relié par un trajet de communication primaire (5) à un collecteur de données (3) pouvant être relié par un trajet de communication tertiaire (6),
**caractérisé en ce que** le capteur (1) est conçu pour
recevoir des conditions variables dynamiquement, constatées par le collecteur de données (3) et/ou la tête de réseau (4), pour une génération d'horodatages (TS) dans le cadre du modèle de corrélation
transmettre une pluralité d'horodatages (TS) sur le trajet de communication primaire (5) respectivement sous forme de paquet de données (17ᵢ, 17ᵢ₊ₙ), un paquet de données comportant respectivement plusieurs horodatages (TS1-TSn), et
faire que la définition à quel moment une transmission de données est à effectuer dépende du fait si une quantité prédéfinie d'horodatages (TS) collectés, en particulier comprimés, depuis la transmission de données précédente est atteinte.

20. Réseau d'alimentation permettant de distribuer un milieu de consommation, comprenant
au moins un capteur local (1), de préférence une pluralité de capteurs locaux (1), pour générer et/ou retransmettre des horodatages (TS) de données de mesure brutes sur la base d'un modèle de corrélation, de préférence de données de mesure brutes en relation avec une consommation d'un milieu de consommation, un paramètre physique ou physico-chimique et/ou un état de fonctionnement d'un compteur de consommation (10),
un collecteur de données (3),
un trajet de communication primaire (5) entre le capteur (1) respectif et le collecteur de données (3),
une tête de réseau (4) pour évaluer les données, et
un trajet de communication tertiaire (6) entre le collecteur de données (3) et la tête de réseau (4),
**caractérisé en ce qu'**un capteur (1) selon la revendication 19 est prévu comme capteur.
